(19) Europäisches Patentamt
European Patent Office
Office européen des brevets

(11) EP 4 332 155 B1

(12) # EUROPEAN PATENT SPECIFICATION

(45) Date of publication and mention of the grant of the patent:
**11.09.2024 Bulletin 2024/37**

(21) Application number: **23193204.7**

(22) Date of filing: **24.08.2023**

(51) International Patent Classification (IPC):
***C08J 9/00*** *(2006.01)* ***C08J 9/18*** *(2006.01)*
***C08J 9/232*** *(2006.01)*

(52) Cooperative Patent Classification (CPC):
**C08J 9/0066; C08J 9/0023; C08J 9/0028; C08J 9/18; C08J 9/232;** C08J 2201/03; C08J 2201/034; C08J 2203/06; C08J 2323/10

(54) **EXPANDED POLYPROPYLENE RESIN BEADS AND EXPANDED POLYPROPYLENE RESIN BEADS MOLDED ARTICLE**

EXPANDIERTE POLYPROPYLENHARZPERLEN UND FORMKÖRPER AUS EXPANDIERTEN POLYPROPYLENHARZPERLEN

PERLES EXPANSÉES DE RÉSINE DE POLYPROPYLÈNE ET ARTICLES MOULÉS EN PERLES EXPANSÉES DE RÉSINE DE POLYPROPYLÈNE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.08.2022 JP 2022137590**

(43) Date of publication of application:
**06.03.2024 Bulletin 2024/10**

(73) Proprietor: **JSP Corporation**
**Tokyo 100-0005 (JP)**

(72) Inventors:
- **YAMASAKI, Shobu**
  **Kanuma-shi, 3220014 (JP)**
- **ITO, Yosuke**
  **Yokkaichi-shi, 5100881 (JP)**

(74) Representative: **Gille Hrabal Partnerschaftsgesellschaft mbB**
**Patentanwälte**
**Brucknerstraße 20**
**40593 Düsseldorf (DE)**

(56) References cited:
**EP-A1- 2 743 295 EP-A1- 3 202 834**
**WO-A2-03/037971**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

FIELD OF THE INVENTION

The present invention relates to expanded polypropylene resin beads and an expanded polypropylene resin beads molded article.

BACKGROUND OF THE INVENTION

An expanded beads molded article obtained by in-mold molding of expanded polypropylene resin beads is excellent in chemical resistance, impact resistance, and compression strain recovery performance, as compared with an expanded polystyrene resin beads molded article. Consequently, an expanded polypropylene resin beads molded article is utilized in a wide range of fields of food transport containers, packaging or buffering materials for electric/electronic components, vehicle members such as automobile bumpers, building members such as residential heat insulating materials, miscellaneous goods, and the like, as shock absorbing materials, heat insulating materials, various packaging materials, and others.

An expanded beads molded article may be added a colorant in order to coloring. The colored expanded beads molded article is excellent in appearance, and therefore may be used in an application for employing the outermost surface of an article. In this case, long-term exposure of the expanded beads molded article to an electromagnetic wave (ultraviolet light, visible light, and infrared light) derived from sunlight degrades the expanded beads molded article, and may reduce the appearance of the expanded beads molded article. For preventing such degradation of the expanded beads molded article, there is employed an attempt of adding a weathering agent to enhance the weather resistance of the expanded beads molded article.

For example, PTL 1 aims at improving weather resistance in addition to fusion bonding properties and heat resistance and discloses expanded polypropylene resin beads that contain a hindered amine compound and an ultraviolet light absorber. They also satisfy a specific relationship between the heat of fusion at the endothermic peak on the high temperature side of the surface layer in the DSC curve of the surface layer and the internal foam layer and the heat of fusion at the endothermic peak on the high temperature side of the internal foam layer in the DSC curve of the surface layer and the internal foam layer.

EP 2 743 295 A1 further discloses expanded particles comprising a polypropylene resin, a hindered amine, carbon black, and optionally a benzotriazole ultraviolet absorber.

CITATION LIST

PATENT LITERATURE

PTL 1: JP2003-321567A

SUMMARY OF THE INVENTION

TECHNICAL PROBLEM

However, when the hindered amine compound and the ultraviolet light absorber are added as a weathering agent, there is a problem that the in-mold moldability of the expanded beads is likely to reduce. Especially, when an inorganic pigment is added as a colorant, there is a problem that the in-mold moldability of the expanded beads is more likely to reduce. Therefore an expanded beads molded article to be obtained is difficult to maintain a good appearance and good tensile physical properties over an extended period.

An object of the present invention is to provide expanded polypropylene resin beads capable of forming an expanded beads molded article that is allowed to maintain a good appearance and good tensile physical properties over an extended period when the expanded beads molded article is used under exposure to sunlight.

SOLUTION TO PROBLEM

The present inventors have found that, by adding a specific amount of an ultraviolet light absorber having a specific molecular weight to expanded polypropylene resin beads, the above-mentioned problems can be solved.

That is, the present invention is as follows.

<1> An expanded polypropylene resin bead containing an inorganic pigment, a hindered amine compound, and an

ultraviolet light absorber, in which the ultraviolet light absorber contains an ultraviolet light absorber A having a molecular weight of 360 or more, and a content of the ultraviolet light absorber A in the expanded polypropylene resin bead is 0.01% by mass or more and 2% by mass or less.

<2> The expanded polypropylene resin bead according to <1>, in which the ultraviolet light absorber A has a melting point of 50°C or higher and 200°C or lower.

<3> The expanded polypropylene resin bead according to <1> or <2>, in which a content of the inorganic pigment in the expanded polypropylene resin bead is 0.01% by mass or more and 5% by mass or less.

<4> The expanded polypropylene resin bead according to any one of <1> to <3>, in which a ratio of the content of the ultraviolet light absorber A to the content of the inorganic pigment is 0.03 or more and 5 or less.

<5> The expanded polypropylene resin bead according to any one of <1> to <4>, in which the ultraviolet light absorber A contains at least one kind selected from the group consisting of a benzoate compound and a triazine compound.

<6> The expanded polypropylene resin bead according to any one of <1> to <5>, in which a content of the hindered amine compound in the expanded polypropylene resin bead is 0.01% by mass or more and 2% by mass or less.

<7> The expanded polypropylene resin bead according to any one of <1> to <6>, in which a ratio of the content of the ultraviolet light absorber A to the content of the hindered amine compound is 0.1 or more and 5 or less.

<8> The expanded polypropylene resin bead according to any one of <1> to <7>, in which an average cell diameter of the expanded polypropylene resin beads is 50 μm or more and 250 μm or less.

<9> The expanded polypropylene resin bead according to any one of <1> to <8>, in which a bulk density of the expanded polypropylene resin bead is 10 kg/$m^3$ or more and 500 kg/$m^3$ or less.

<10> An expanded polypropylene resin beads molded article produced by in-mold molding the expanded polypropylene resin bead of any one of <1> to <9>.

<11> The expanded polypropylene resin beads molded article according to <10>, in which a tensile elongation of the expanded polypropylene resin beads molded article is 15% or more.

## ADVANTAGEOUS EFFECTS OF THE INVENTION

The present invention can provide expanded polypropylene resin beads capable of producing an expanded beads molded article excellent in long-term weather resistance and excellent in tensile physical properties, and an expanded polypropylene resin beads molded article excellent in long-term weather resistance and excellent in tensile physical properties.

## DETAILED DESCRIPTION OF THE INVENTION

### [Expanded Polypropylene Resin Beads]

Expanded polypropylene resin beads of the present invention (hereinafter sometimes simply referred to as "expanded polypropylene resin beads" or "expanded beads") are expanded polypropylene resin beads containing an inorganic pigment, a hindered amine compound, and an ultraviolet light absorber, in which the ultraviolet light absorber contains an ultraviolet light absorber A having a molecular weight of 360 or more, and the content of the ultraviolet light absorber A in the expanded polypropylene resin bead is 0.01% by mass or more and 2% by mass or less. In the present specification, the numerical value range indicated by using "to" means a range including the numerical values before and after "to" as the lower limit value and the upper limit value, respectively.

### <Polypropylene Resin>

The expanded polypropylene resin beads contain a polypropylene resin as a base resin. The polypropylene resin herein is a resin in which the content of a structural unit derived from propylene in the resin is 50% by mass or more. The content of the structural unit derived from propylene in the polypropylene resin is preferably 60% by mass or more, more preferably 70% by mass or more, further preferably 80% by mass or more, even more preferably 85% by mass or more.

In the present invention, the polypropylene resin includes a propylene homopolymer, a propylene copolymer, and a mixture thereof, and is preferably a propylene copolymer or a mixture of a propylene homopolymer and a propylene copolymer, more preferably a propylene copolymer.

Examples of the propylene copolymer include a copolymer of propylene with ethylene and/or α-olefin having 4 to 20 carbon atoms. Examples of the α-olefin include 1-butene, 1-pentene, 1-hexene, 1-octene, and 4-methyl-1-butene. The content of a component derived from ethylene and/or a component derived from α-olefin having 4 to 20 carbon atoms contained in the propylene copolymer as a copolymer component is preferably 1 to 15% by mass.

Among them, preferably, the polypropylene resin contains an ethylene-propylene copolymer and/or an ethylene-propylene-butene copolymer as a main component. In this case, the ratio of the ethylene-propylene copolymer and/or the ethylene-propylene-butene copolymer in the polypropylene resin is preferably 60% by mass or more, more preferably 80% by mass or more, further preferably 90% by mass or more.

When the propylene copolymer contains a component derived from ethylene (ethylene component) and/or a component derived from butene (butene component) as a copolymer component, the content of the ethylene component and/or the butene component in the propylene copolymer is preferably 1% by mass or more, more preferably 2% by mass or more, further preferably 3% by mass or more, from the viewpoint of enhancing the in-mold moldability of the expanded beads under a low molding pressure condition. The content of the ethylene component and/or the butene component in the propylene copolymer is preferably 15% by mass or less from the viewpoint of stably producing an expanded beads molded article having good compressive strength. That is, the content of the ethylene component and/or the butene component in the propylene copolymer is preferably 1 to 15% by mass, more preferably 2 to 15% by mass, further preferably 3 to 15% by mass. The content of the component derived from the α-olefin in the propylene copolymer is determined by IR spectrum measurement.

(Melting Point)

From the viewpoint of enhancing the tensile physical properties of an expanded polypropylene resin beads molded article produced by in-mold molding of the expanded polypropylene resin beads of the present invention (hereinafter sometimes simply referred to as an "expanded polypropylene resin beads molded article", an "expanded beads molded article", or a "molded article"), the melting point of the polypropylene resin is preferably 120°C or higher, more preferably 125°C or higher, further preferably 132°C or higher, even more preferably 135°C or higher. On the other hand, from the viewpoint of enhancing the in-mold moldability of the expanded beads, the melting point of the polypropylene resin is preferably 155°C or lower, more preferably 150°C or lower, further preferably 146°C or lower. That is, the melting point of the polypropylene resin is preferably 120°C to 155°C, more preferably 125°C to 150°C, further preferably 132°C to 146°C.

The melting point of the polypropylene resin is measured according to JIS K 7121:2012 using the polypropylene resin or the expanded beads as a test piece. Specifically, for state control of the test piece, "(2) a case of measuring a melting temperature after predetermined heat treatment" is employed, in which the test piece is heated from 23°C up to 200°C at a heating rate of 10°C/min under a condition of a nitrogen flow rate of 30 mL/min, then kept at the temperature for 10 minutes, cooled down to 23°C at a cooling rate of 10°C/min, and again heated up to 200°C at a heating rate of 10°C/min to draw a DSC curve (DSC curve at the time of second heating). Next, the peak temperature of the melting peak on the DSC curve is read, and the value can be referred to as the melting point of the polypropylene resin. In the case where plural melting peaks appear on the DSC curve, the peak temperature of the melting peak having a highest melting peak height on the basis of the baseline is employed as the melting point.

(Melt Flow Rate (MFR))

From the viewpoint of enhancing expandability during expanding of resin particles or the viewpoint of enhancing secondary expandability during in-mold molding of the expanded beads, the MFR of the polypropylene resin is preferably 2 g/10 min or more, more preferably 5 g/10 min or more, and preferably 10 g/10 min or less, more preferably 9 g/10 min or less. That is, the MFR of the polypropylene resin is preferably 2 to 10 g/10 min, more preferably 5 to 9 g/10 min.

The MFR of the polypropylene resin is measured under a condition of a temperature of 230°C and a load of 2.16 kg according to JIS K 7210-1:2014.

<Ultraviolet Light Absorber>

The expanded polypropylene resin beads of the present invention contain an ultraviolet light absorber. The ultraviolet light absorber contains an ultraviolet light absorber A having a molecular weight of 360 or more.

The ultraviolet light absorber is a compound having properties for absorbing ultraviolet light, and means a compound that can mainly absorb light having a wavelength of 280 nm to 400 nm, and convert the absorbed energy to an energy such as heat to prevent degradation of the resin due to ultraviolet light. Examples of the ultraviolet light absorber used for the polypropylene resin include a benzophenone compound such as a benzophenone derivative (a benzophenone ultraviolet light absorber), a benzotriazole compound such as a benzotriazole derivative (a benzotriazole ultraviolet light absorber), a triazine compound such as a triazine derivative (a triazine ultraviolet light absorber), and a benzoate compound such as a benzoate ester and a derivative thereof (a benzoate ultraviolet light absorber).

When in addition to an inorganic pigment and a hindered amine compound described below, the ultraviolet light absorber A is added, the resultant expanded beads molded article has a good appearance and is excellent in long-term weather resistance and excellent in tensile physical properties.

Heretofore, when the inorganic pigment is added to the expanded beads, the in-mold moldability of the expanded beads tends to reduce. When the hindered amine compound and the ultraviolet light absorber are added to the expanded beads, the in-mold moldability of the expanded beads tends to reduce. Heretofore, when the inorganic pigment, the hindered amine compound, and the ultraviolet light absorber are added to the expanded beads, the in-mold moldability of the expanded beads may reduce, and the tensile physical properties of the resultant molded article may reduce.

With respect to this, it is found that use of the ultraviolet light absorber A having a molecular weight equal to or more than the above-described value can prevent a reduction in the in-mold moldability of the expanded beads while the inorganic pigment and the hindered amine compound are contained. Although a reason for this is not clear, it is considered that the use of the ultraviolet light absorber A having a molecular weight equal to or more than the above-described value hardly moves the ultraviolet light absorber in the resin constituting the expanded beads, and an excess of the ultraviolet light absorber hardly exists on a surface layer portion of the expanded beads. Thus, it is considered that a reduction in fusion bonding properties between the expanded beads caused by the ultraviolet light absorber is prevented, and a reduction in the in-mold moldability of the expanded beads is prevented. The use of the ultraviolet light absorber A having a molecular weight equal to or more than the above-described value prevents excess plasticization of the surface layer portion of the expanded beads caused by the ultraviolet light absorber, and therefore expanded beads excellent in molding cycle can be obtained.

Furthermore, it is considered that the addition of the ultraviolet light absorber A having a molecular weight equal to or more than the above-described value easily keeps a state in which the ultraviolet light absorber is relatively uniformly distributed in the expanded beads molded article. Therefore, a reduction in weather resistant caused by variation in distribution of the ultraviolet light absorber in the molded article may be prevented, and an expanded beads molded article excellent in long-term weather resistance may be obtained.

(Molecular Weight)

From the viewpoint of producing an expanded beads molded article having excellent tensile physical properties at a good molding cycle, the molecular weight of the ultraviolet light absorber A is preferably 380 or more, more preferably 400 or more. The upper limit of the molecular weight of the ultraviolet light absorber A is not particularly limited within a range capable of attaining the intended object of the present invention. From the viewpoint of efficiently adding the ultraviolet light absorber to the polypropylene resin and the viewpoint of giving excellent long-term weather resistance to the expanded beads molded article, it is preferably 600 or less, more preferably 550 or less. That is, the molecular weight of the ultraviolet light absorber A is preferably 360 to 600, more preferably 380 to 550, further preferably 400 to 550.

The molecular weight of the ultraviolet light absorber A can be determined from the atomic weights of atoms constituting the ultraviolet light absorber A. The molecular weight can be measured by field desorption mass spectrometry (FD-MS). In this case, the measurement can be carried out, for example, by the following method.

As a device, a gas chromatography time-of-flight mass spectrometer "JMD-T100GCV" manufactured by JEOL Ltd. can be used. 10 mg of the ultraviolet light absorber is dissolved in 10 mL of chloroform to obtain an ultraviolet light absorber solution. 1 μL of the ultraviolet light absorber solution is applied to an emitter of the device with a microsyringe to introduce the ultraviolet light absorber into the device. Subsequently, the molecule of the ultraviolet light absorber is ionized, and a spectrum with a m/z value of the ion is obtained. The m/z value that is a main peak of the spectrum can be measured as the molecular ion of the ultraviolet light absorber and determined as the molecular weight of the ultraviolet light absorber.

As the ultraviolet light absorber A, for example, a benzoate compound, a triazine compound, a benzotriazole compound, or the like can be suitably used. From the viewpoint of shortening the molding cycle during in-mold molding of the expanded beads or the viewpoint of easily producing an expanded beads molded article excellent in tensile strength, the ultraviolet light absorber A preferably contains at least one kind selected from the group consisting of the benzoate compound and the triazine compound among them, more preferably contains the benzoate compound and the triazine compound. In this case, the ratio of the benzoate compound and/or the triazine compound in the ultraviolet light absorber A is preferably 50% by mass or more, more preferably 60% by mass or more, further preferably 80% by mass or more, even more preferably 90% by mass or more.

When the ultraviolet light absorber A contains the benzoate compound and the triazine compound, the ratio of the content of the triazine compound to the content of the benzoate compound (triazine compound/benzoate compound) is preferably 0.1 or more and 0.8 or less, more preferably 0.2 or more and 0.6 or less. In this case, an expanded beads molded article having more excellent long-term weather resistance can be obtained.

From the viewpoint of stably producing an expanded beads molded article having excellent long-time weather resistance, the content of the ultraviolet light absorber A in the expanded polypropylene resin beads is 0.01% by mass or more, preferably 0.05% by mass or more, more preferably 0.08% by mass or more, further preferably 0.1% by mass or more. From the viewpoint of stably producing expanded beads having good in-mold moldability, the content of the

ultraviolet light absorber A in the expanded polypropylene resin beads is 2% by mass or less, preferably 1% by mass or less, more preferably 0.8% by mass or less. That is, the content of the ultraviolet light absorber A in the expanded polypropylene resin beads is preferably 0.01 to 2% by mass, more preferably 0.05 to 1% by mass, further preferably 0.08 to 0.8% by mass, even more preferably 0.1 to 0.8% by mass.

The expanded beads may contain an ultraviolet light absorber other than the ultraviolet light absorber A within a range not detracting from the object and the advantageous effects of the present invention. From the viewpoint of stably producing expanded beads having good in-mold moldability, the content of the ultraviolet light absorber other than the ultraviolet light absorber A in the expanded beads is preferably 40 parts by mass or less, more preferably 30 parts by mass or less, further preferably 20 parts by mass or less, even more preferably 10 parts by mass or less, relative to 100 parts by mass of the ultraviolet light absorber A.

The content of the ultraviolet light absorber A in the expanded polypropylene resin beads can be calculated, for example, by proton nuclear magnetic resonance ($^1H$-NMR) measurement of the expanded beads. Specifically, the following method can be employed. First, the expanded beads are frozen and crushed, and about 2 g thereof is measured. Next, the expanded beads that had been frozen and crushed are subjected to Soxhlet extraction using chloroform as a solvent to remove a chloroform-insoluble polymer component and the like. Next, a chloroform-soluble component obtained in Soxhlet extraction is mixed with acetone, and an acetone-insoluble component is removed. The solvent is removed from an acetone-soluble component, and the resultant solid is used as a measurement sample. The sample is subjected to proton nuclear magnetic resonance ($^1H$-NMR), and the content thereof can be calculated from the integral ratio to a standard product (internal standard sample) having a known concentration.

For proton nuclear magnetic resonance ($^1H$-NMR), for example, "AL-400 Model" (trade name) manufactured by JEOL Ltd. can be used. A measurement condition of a solvent: $CDCl_3$ and the internal standard sample: tetrachloroethane (TCE) can be employed.

(Melting Point)

From the viewpoint of stably producing expanded beads that hardly move the ultraviolet light absorber in the resin constituting the expanded beads and have good in-mold moldability, the melting point of the ultraviolet light absorber A is preferably 50°C or higher, more preferably 100°C or higher, further preferably 120°C or higher, even more preferably 140°C or higher. From the viewpoint of producing expanded beads having uniform cell diameter distribution that is achieved by sufficiently dispersing the ultraviolet light absorber in the base resin, the melting of the ultraviolet light absorber A is preferably 200°C or lower, more preferably 198°C or lower. That is, the melting point of the ultraviolet light absorber A is preferably 50°C to 200°C, more preferably 100°C to 200°C, further preferably 120°C to 200°C, even more preferably 140°C to 198°C.

The melting point of the ultraviolet light absorber A is measured according to JIS K 0064: 1992. Specifically, the ultraviolet light absorber that is a sample is put in a glass capillary. The closed end side of the capillary is filled with the sample. A silicone oil is put in a glass container for heating equipped with a thermometer, and the closed end of the capillary is immersed. Heating is continuously carried out until the temperature increasing rate of the silicone oil is constant, and a temperature at which a solid is not visually recognized in the capillary is referred to as a melting point.

As the ultraviolet light absorber A, a commercially available product can be employed. Examples of the commercially available product of the ultraviolet light absorber A include trade names "Tinuvin99-2", "Tinuvin384-2", "Tinuvin900", "Tinuvin928", and "Tinuvin1130" available from BASF that are benzotriazole ultraviolet light absorbers, trade name "Tinuvin120" available from BASF and trade name "Cyasorb UV-2908" available from Solvay S.A., that are benzoate ultraviolet light absorbers, and trade name "Tinuvin1577" available from BASF and trade name "Cyasorb UV-1164" available from Solvay S.A., that are triazine ultraviolet light absorbers.

<Inorganic Pigment>

From the viewpoint of giving a good appearance to the molded article, the expanded polypropylene resin beads of the present invention contain an inorganic pigment. In the present invention, the inorganic pigment means a substance having an action of giving a color to the expanded beads or the expanded beads molded article or an action of adjusting a color by containing the inorganic pigment in the resin component of the expanded beads and the molded article. The inorganic pigment contained in the expanded beads represents an inorganic pigment that exists in the resin component constituting the expanded beads. The color that can be given by the inorganic pigment includes chromatic colors such as black, red, yellow, green, and blue. Although an expanded beads molded article to which a colorant is not added is usually white, a white pigment can be added to improve whiteness of the molded article.

Examples of a black pigment of the inorganic pigment include carbon materials such as carbon black, carbon nanotubes, and graphene, iron black, and titanium black. Examples of the white pigment include titanium dioxide, zinc oxide, silica, alumina, magnesium oxide, antimony trioxide, barium sulfate, and lithopone. Examples of a red pigment

include red oxide. Examples of a yellow pigment include iron yellow and zinc yellow. Examples of a green pigment include viridian and cobalt green. Examples of a blue pigment include ultramarine blue, prussian blue, cobalt blue, and YInMn blue.

From the viewpoint of giving a good appearance such as black, the inorganic pigment preferably contains carbon black and/or titanium oxide. When the inorganic pigment contains carbon black, the ratio of carbon black in the inorganic pigment is preferably 50% by mass or more, more preferably 60% by mass or more, further preferably 80% by mass or more, even more preferably 90% by mass or more.

As the carbon black, for example, channel black, roller black, furnace black, thermal black, acetylene black, or the like, can be used.

From the viewpoint of preventing generation of color unevenness of the molded article and easily producing a molded article having a good appearance, the content of the inorganic pigment in the expanded polypropylene resin beads is preferably 0.01% by mass or more, more preferably 0.05% by mass or more, further preferably 1% by mass or more, even more preferably 2% by mass or more. From the viewpoint of stably producing expanded beads having good in-mold moldability, the content of the inorganic pigment in the expanded polypropylene resin beads is preferably 6% by mass or less, more preferably 5% by mass or less, further preferably 4% by mass or less, even more preferably 3% by mass or less. That is, the content of the inorganic pigment in the expanded polypropylene resin beads is preferably 0.01 to 6% by mass, more preferably 0.05 to 5% by mass, further preferably 1 to 4% by mass, even more preferably 2 to 3% by mass.

(Content of Ultraviolet Light Absorber A/Content of Inorganic Pigment)

From the viewpoint of stably producing an expanded beads molded article having a good appearance such as no color unevenness and exhibiting excellent long-term weather resistance or the viewpoint of shortening the molding cycle during in-mold molding of the expanded beads, the ratio of the content of the ultraviolet light absorber A to the content of the inorganic pigment in the expanded polypropylene resin beads is preferably 0.01 or more, more preferably 0.03 or more, further preferably 0.05 or more. From the viewpoint of stably producing an expanded beads molded article excellent in tensile physical properties or the viewpoint of shortening the molding cycle during in-mold molding of the expanded beads, the ratio of the content of the ultraviolet light absorber A to the content of the inorganic pigment in the expanded polypropylene resin beads is preferably 11 or less, more preferably 8 or less, further preferably 5 or less, even more preferably 3 or less, even more preferably 1 or less. That is, the ratio of the content of the ultraviolet light absorber A to the content of the inorganic pigment in the expanded beads is preferably 0.01 to 11, more preferably 0.01 to 8, further preferably 0.03 to 5, even more preferably 0.05 to 3, even more preferably 0.05 to 1.

<Hindered Amine Compound>

From the viewpoint of giving long-term weather resistance to the resultant expanded beads molded article, the expanded polypropylene resin beads of the present invention contain a hindered amine compound.

Preferably, the hindered amine compound has at least two hindered amine moieties represented by the following general formula (I). The hindered amine compound in which X in the general formula (I) is a hydrocarbon group is also referred to as an NR-type hindered amine. The hindered amine compound in which X in the general formula (I) is a hydrocarbon group to be bonded via an oxygen atom is also referred to as an NOR-type hindered amine. One kind of the hindered amine compound may be used alone, or two or more kinds thereof may be used in combination.

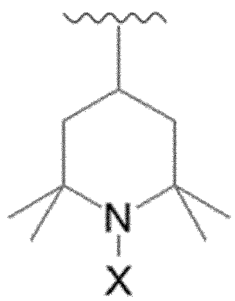

· · · (I)

In the formula (I), X represents a hydrocarbon group or a hydrocarbon group to be bonded via an oxygen atom.

The hindered amine compound has, in the structure, at least two 2,2,6,6-tetramethyl-4-piperidineamine moieties represented by the general formula (I). They consume radicals that are formed especially by light, and can prevent molecular chain cleavage (molecular weight reduction) of the resin, easily prevent excess heat plasticization of the

surface portion of the expanded beads, and improve the molding cycle of the molded article.

(Molecular Weight)

From the viewpoint of preventing bleeding out from the molded article and stably expressing long-term weather resistance in the molded article, the molecular weight of the hindered amine compound is preferably 500 or more, more preferably 600 or more, further preferably 650 or more. From the viewpoint of enhancing the dispersibility of the hindered amine compound in the resin and stably expressing weather resistance for a relatively short period in the molded article, the molecular weight of the hindered amine compound is preferably 2,000 or less, more preferably 1,900 or less, further preferably 1,800 or less. That is, the molecular weight of the hindered amine compound is preferably 500 to 2,000, more preferably 600 to 1,900, further preferably 650 to 1,800.

When the hindered amine compound has a structure univocally determined, the molecular weight of the hindered amine compound can be determined from the atomic weights of atoms constituting the hindered amine compound. When the hindered amine compound has a structure having a repeating unit (for example, a hindered amine compound of oligomer type or polymer type), the molecular weight of the hindered amine compound can be calculated as a polystyrene-equivalent number-average molecular weight. The polystyrene-equivalent number-average molecular weight is a number-average molecular weight calculated by gel permeation chromatography (GPC) using monodisperse polystyrene as a standard substance. For example, it can be determined by the following method. 10 mg of the hindered amine compound is dissolved in 10 mL of tetrahydrofuran to obtain a hindered amine compound solution. The solution is subjected to measurement under a measurement condition of a column temperature of 23°C and a flow rate of 1 mL/min using a high-performance liquid chromatograph, trade name "LC3A" manufactured by Shimadzu Corporation, a refractive index detector, trade name "RID-4" manufactured by Shimadzu Corporation, and a column for high-performance liquid chromatograph, trade name "Shim-pack GPC-802" manufactured by Shimadzu Corporation to obtain a chromatogram. Using a calibration curve formed using a standard polystyrene, the retention time in the chromatogram obtained by the measurement is converted to the molecular weight to obtain a differential molecular weight distribution curve. From the differential molecular weight distribution curve, the number-average molecular weight of the hindered amine compound can be calculated.

As the hindered amine compound contained in the expanded polypropylene resin beads of the present invention, a hindered amine compound having a repeating unit represented by the following general formula (II) can be used.

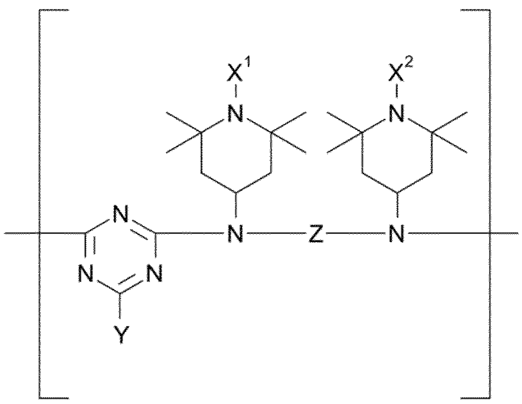

(II)

In the general formula (II), Z represents an alkylene group having 5 to 10 carbon atoms, Y represents an amino group, and $X^1$ and $X^2$ each independently represent a hydrocarbon group or a hydrocarbon group to be bonded via an oxygen atom.

When the expanded polypropylene resin beads of the present invention contain the hindered amine compound represented by the general formula (II), an expanded beads molded article excellent in long-term weather resistance and excellent in tensile physical properties is easily obtained. Although not clear, the reason can be considered as follows.

The hindered amine compound has, in the structure, the hindered amine moiety represented by the general formula (I). They consume radicals that are formed especially by light, and can prevent molecular chain cleavage (molecular weight reduction) of the resin. In the structure, the compound has a triazine moiety represented by the following general formula (III) and an alkylene moiety having a relatively long carbon chain represented by Z in the general formula (II), and has a relatively large molecular weight, and therefore easily prevents bleeding out from the resin. Therefore, it is considered that long-term weather resistance is easily given.

Further, an inorganic dispersant or the like can hardly coordinate with a nitrogen atom positioned in the triazine moiety or at both ends of the alkylene moiety. Therefore, when the resin particles are expanded, an inorganic dispersant

or the like in a dispersing medium can be prevented from adhering to the surface of the expanded beads and, as a result, the fusion bonding properties of the expanded beads are considered to increase. Accordingly, it is considered that a molded article excellent in tensile physical properties is easily obtained.

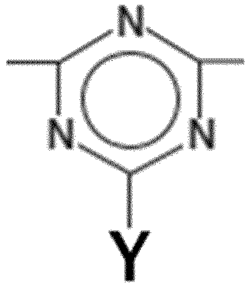

(III)

In the general formula (III), Y represents an amino group.

In the general formula (II), Z represents an alkylene group having 5 to 10 carbon atoms. Z is preferably an alkylene group having 5 to 8 carbon atoms, more preferably an alkylene group having 6 carbon atoms (hexamethylene group).

In the general formula (II), Y represents an amino group. Y is preferably a secondary amino group or a tertiary amino group, more preferably a tertiary amino group. In the case where Y is a tertiary amino group, Y is preferably a dialkylamino group or a morpholinyl group, more preferably a morpholinyl group. When Y is a morpholinyl group, the resultant expanded beads molded article can be given stable long-term weather resistance.

In the general formula (II), $X^1$ and $X^2$ each independently represent a hydrocarbon group or a hydrocarbon group to be bonded via an oxygen atom. Examples of the hydrocarbon group includes an alkyl group and a cycloalkyl group. Examples of the hydrocarbon group to be bonded via an oxygen atom include an alkoxy group. $X^1$ is preferably an alkyl group, more preferably an alkyl group having 1 to 4 carbon atoms, further preferably a methyl group. $X^2$ is preferably an alkyl group, more preferably an alkyl group having 1 to 4 carbon atoms, further preferably a methyl group. $X^1$ and $X^2$ may be the same or different, preferably the same.

Heretofore, when an NR-type hindered amine is used, a molded article excellent in weather resistance is hardly obtained as compared with the case using an NH-type hindered amine or an NOR-type hindered amine. The NH-type hindered amine is a hindered amine compound having a structure of the general formula (I) in which X is a hydrogen atom (>NH), and the NOR-type hindered amine is, for example, a hindered amine compound having a structure of the general formula (I) in which X is an alkoxy group (>NOR) as described above. On the other hand, when the hindered amine compound having the structure represented by the general formula (II) is used, it is considered that an expanded beads molded article that has good fusion bonding properties between the expanded beads and is excellent in tensile physical properties and also excellent in long-term weather resistance is easily obtained. In the hindered amine compound, the number of repeating units represented by the general formula (II) is preferably 2 or more and 5 or less. An end group on the triazine moiety side of the hindered amine compound is preferably a hydroxy group or Y in the general formula (II). An end group on the alkylene moiety side of the hindered amine compound is preferably a hydrogen atom or the triazine moiety represented by the general formula (III) in the general formula (II) (in the triazine moiety, a substituent of carbon not bonded to the nitrogen atom is a hydroxy group or Y in the general formula (II)).

From the viewpoint of stably giving long-time weather resistance to the molded article, the content of the hindered amine compound in the expanded polypropylene resin beads is preferably 0.01% by mass or more, more preferably 0.05% by mass or more, further preferably 0.1% by mass or more. From the viewpoint of stably producing expanded beads having good in-mold moldability and stably producing an expanded beads molded article having more excellent tensile strength, the content of the hindered amine compound in the expanded polypropylene resin beads is preferably 2% by mass or less, more preferably 1% by mass or less, further preferably 0.7% by mass or less, even more preferably 0.5% by mass or less. That is, the content of the hindered amine compound in the expanded polypropylene resin beads is preferably 0.01 to 2% by mass, more preferably 0.05 to 1% by mass, further preferably 0.1 to 0.7% by mass, even more preferably 0.1 to 0.5% by mass.

Similar to the measurement of the content of the ultraviolet light absorber A in the expanded polypropylene resin beads, the content of the hindered amine compound in the expanded polypropylene resin beads can be calculated, for example, by proton nuclear magnetic resonance ($^1$H-NMR) measurement for the expanded beads.

(Content of Ultraviolet Light Absorber A/Content of Hindered Amine Compound)

From the viewpoint of producing an expanded beads molded article having good in-mold moldability of the

expanded beads, exhibiting excellent long-term weather resistance, and exhibiting tensile physical properties and a good surface appearance, the ratio of the content of the ultraviolet light absorber A to the content of the hindered amine compound is preferably 0.1 or more, more preferably 0.3 or more, and from the viewpoint of stably producing expanded beads having good in-mold moldability, the ratio is preferably 5 or less, more preferably 4 or less, further preferably 3 or less. That is, the ratio of the content of the ultraviolet light absorber A to the content of the hindered amine compound is preferably 0.1 to 5, more preferably 0.3 to 4, further preferably 0.3 to 3.

(Content of Hindered Amine Compound/Content of Inorganic Pigment)

When the expanded beads contain the inorganic pigment, the ratio of the content of the hindered amine compound to the content of the inorganic pigment in the expanded beads is preferably 0.01 or more, more preferably 0.03 or more, further preferably 0.04 or more, even more preferably 0.05 or more from the viewpoint of stably producing expanded beads capable of forming an expanded beads molded article exhibiting good long-term weather resistance. From the viewpoint of stably producing expanded beads having good fusion bonding properties and good in-mold moldability, the ratio of the content of the hindered amine compound to the content of the inorganic pigment in the expanded beads is preferably 15 or less, more preferably 12 or less, further preferably 10 or less, even more preferably 8 or less, even more preferably 5 or less. That is, the ratio of the content of the hindered amine compound to the content of the inorganic pigment in the expanded beads is preferably 0.01 to 15, more preferably 0.01 to 12, further preferably 0.03 to 10, even more preferably 0.04 to 8, even more preferably 0.05 to 5.

<Physical Properties of Expanded Polypropylene Resin Beads>

(Average Cell Diameter)

The average cell diameter of the expanded polypropylene resin beads is preferably 50 μm or more and 250 μm or less. The average cell diameter of the expanded polypropylene resin beads of the present invention is more preferably 55 μm or more, further preferably 60 μm or more. When the average cell diameter of the expanded beads falls within the range, the expanded beads can be excellent in in-mold moldability and can stably give an expanded beads molded article being excellent in tensile physical properties and exhibiting excellent long-term weather resistance. The average cell diameter of the expanded polypropylene resin beads of the present invention is more preferably 200 μm or less, further preferably 150 μm or less, even more preferably 120 μm or less. When the average cell diameter of the expanded beads falls within the range, the time necessary for cooling in taking out a molded article from a mold in in-mold molding can be shortened, and expanded beads excellent in molding cycle can be obtained. That is, the average cell diameter of the expanded polypropylene resin beads is more preferably 55 to 200 μm, further preferably 60 to 150 μm, even more preferably 60 to 120 μm.

The average cell diameter of the expanded polypropylene resin beads can be measured as follows.

Drawing plural line segments each running from the outermost surface of an expanded bead to the outermost surface on the opposite side thereof passing through the center part, on an enlarged picture of a cross section of the expanded bead divided into two. Then, dividing the number of the cells crossing each of the line segments by the total length of the line segments. Specifically, the measurement can be carried out by the method described in Examples.

The average cell diameter of the expanded beads can be controlled to fall within a desired range, for example, by controlling the kind and the amount of a cell controlling agent to be added to the resin particles and the amount of the hindered amine compound and the ultraviolet light absorber to be added thereto, or by controlling the expanding pressure in expanding the resin particles.

(Bulk Density)

The bulk density of the expanded polypropylene resin beads is preferably 10 $kg/m^3$ or more and 500 $kg/m^3$ or less. The bulk density of the expanded polypropylene resin beads of the present invention is more preferably 15 $kg/m^3$ or more, further preferably 20 $kg/m^3$ or more, even more preferably 25 $kg/m^3$ or more. The bulk density of the expanded polypropylene resin beads of the present invention is more preferably 200 $kg/m^3$ or less, further preferably 150 $kg/m^3$ or less, even more preferably 100 $kg/m^3$ or less, even more preferably 60 $kg/m^3$ or less. The bulk density of the expanded beads falling within the range is preferred since an expanded beads molded article that is light and excellent in tensile physical properties can be obtained. That is, the bulk density of the expanded polypropylene resin beads is more preferably 15 to 200 $kg/m^3$, further preferably 20 to 150 $kg/m^3$, even more preferably 25 to 100 $kg/m^3$, even more preferably 25 to 60 $kg/m^3$. The bulk density of the expanded beads can be measured according to the method described in Examples.

Preferably, the expanded polypropylene resin beads have at least one melting peak (high-temperature peak)

on the high temperature side of the melting peaks intrinsic to the resin of the polypropylene resin (resin-intrinsic peaks), on a DSC curve drawn in differential scanning calorimetry (DSC) according to JIS K 7122:1987.

These melting peaks can be detected according to the following method. Specifically, using a differential scanning calorimeter, 1 to 3 mg of expanded beads are heated from 23°C up to 200°C at a heating rate of 10°C/min, a DSC curve can be obtained, and the melting peak (high-temperature peak) can be confirmed on the DSC curve.

The DSC curve in this case means a DSC curve (DSC curve in the first heating) obtained when heating the expanded beads according to the above-mentioned measurement method. An endothermic peak intrinsic to resin (resin-intrinsic peak) means an endothermic peak by melting of crystal intrinsic to the polypropylene resin that constitutes the expanded beads. It is considered that the resin-intrinsic peak is an endothermic peak appearing due to absorption of heat associated with melting of crystal that the polypropylene resin constituting the expanded beads generally has.

On the other hand, the endothermic peak (high-temperature peak) on the high-temperature side of the resin-intrinsic peaks is an endothermic peak appearing on the higher temperature side than the resin-intrinsic peak on the first DSC curve. In the case where the high-temperature peak appears, it is presumed that a secondary crystal may exist in the resin. On the DSC curve (DSC curve on the second heating) obtained when heating the expanded beads from 23°C up to 200°C at a heating rate of 10°C/min (first heating), then cooling them from 200°C down to 23°C at a cooling rate of 10°C/min, and thereafter again heating them from 23°C up to 200°C at a heating rate of 10°C/min (second heating), only an endothermic peak appears by melting of crystal intrinsic to the polypropylene resin that constitutes the expanded beads. The resin-intrinsic peak appears on the DSC curve of the first heating and also on the DSC curve of the second heating, and therefore it can be confirmed which peak is the resin-intrinsic peak by comparison of the shape and the peak position of the first DSC curve with the shape and the peak position of the second DSC curve.

Preferably, the expanded beads are expanded beads in which only a melting peak (intrinsic peak) intrinsic to the polypropylene based resin appears on the DSC curve of the second heating in heating the expanded beads from 23°C up to 200°C at a heating rate of 10°C/min, then cooling them from 200°C down to 23°C at a cooling rate of 10°C/min, and thereafter heating them from 23°C up to 200°C at a heating rate of 10°C/min.

(Heat of Fusion at High-Temperature Peak)

The heat of fusion at the high-temperature peak of the expanded polypropylene resin beads is preferably 5 to 40 J/g, more preferably 7 to 30 J/g, further preferably 10 to 20 J/g. The heat of fusion at the high-temperature peak of the expanded beads falling within the range is preferred since a molding condition range capable of giving a good expanded beads molded article can be broadened.

The heat of fusion at the high-temperature peak of the expanded polypropylene resin beads can be measured according to the above-mentioned method. Specifically, it can be measured according to the method described in Examples.

(Total Heat of Fusion)

The total heat of fusion of the expanded polypropylene resin beads of the present invention is the sum of the heat of fusion of all the melting peaks (endothermic peaks) appearing on the first DSC curve. The total heat of fusion of the expanded polypropylene resin beads of the present invention is preferably 25 to 200 J/g, more preferably 35 to 150 J/g, further preferably 50 to 90 J/g. The total heat of fusion of the expanded beads falling within the range is preferred since expanded beads excellent in the balance between the in-mold moldability thereof and the physical properties of the resultant molded article can be stably obtained. The total heat of fusion of the expanded polypropylene resin beads can be measured according to the method described in Examples.

Preferably, the expanded polypropylene resin beads of the present invention are expanded beads produced by expanding resin particles not surface-modified with an organic peroxide. In this case, expanded beads that enable in-mold molding under a relatively low molding pressure can be produced with high productivity.

From the viewpoint, preferably, the expanded polypropylene resin beads of the present invention have one or more melting peaks (high-temperature peaks) on the high-temperature side of the melting peaks (resin-intrinsic peaks) intrinsic to the polypropylene resin, and satisfy a relationship of the following formula (1).

$$\Delta Hs \geq \Delta Hi \times 0.86 \quad (1)$$

In the formula (1), $\Delta Hs$ is a heat of fusion at the high-temperature peak of the surface layer portion of the expanded beads, and $\Delta Hi$ is a heat of fusion at the high-temperature peak of the inner portion of the expanded beads.

From the viewpoint of enabling in-mold molding under a relatively low molding pressure and stably producing a molded article having good physical properties, preferably, the melting point of the polypropylene resin that constitutes

the expanded beads is 155°C or lower, and the expanded beads satisfy the formula (1) and the following formula (2).

$$\Delta Hi \times 1.2 \geq \Delta Hs \quad (2)$$

ΔHs can be measured according to the same method as the method for measuring the heat of fusion at the high-temperature peak of the expanded polypropylene resin beads, except that a sample cut out of the surface layer portion of the expanded bead is used. ΔHi can be measured according to the same method as the method for measuring the heat of fusion at the high-temperature peak of the expanded polypropylene resin beads, except that a sample cut out from the expanded bead so as not to include the surface layer portion thereof is used.

The surface layer portion of the expanded beads means a portion included in a range from the surface of the expanded bead to a depth of 200 μm toward the center of the expanded bead. In preparing the sample, the sample of the surface layer portion or the inner part portion is cut out from plural expanded beads. Predetermined amounts of the samples are prepared and may be used in the measurement.

The average mass per one bead (arithmetic average per one bead calculated by measuring the mass of 200 randomly chosen beads) of the expanded polypropylene resin beads is preferably 0.1 to 20 mg, more preferably 0.2 to 10 mg, further preferably 0.3 to 5 mg, even more preferably 0.4 to 2 mg.

An additive may be appropriately added to the expanded polypropylene resin beads of the present invention within a range not detracting from the advantageous effects of the present invention. Examples of the additive include an antioxidant, an antistatic agent, a flame retardant, a conductive filler, a dye, and a cell controlling agent. For example, the additive can be contained in the expanded beads by adding the additive in a step of producing the resin particles.

As the cell controlling agent, for example, an inorganic powder and an organic powder can be used. Examples of the inorganic powder include a metal borate such as zinc borate and magnesium borate. Examples of the organic powder include a fluorine resin powder such as polytetrafluoroethylene (PTFE).

From the viewpoint of stably producing expanded beads having a desired bulk density and having a less fluctuating cell diameter, the content of the cell controlling agent in the resin particles is preferably 50 ppm by mass or more and 5,000 ppm by mass or less, more preferably 100 ppm by mass or more and 2,000 ppm by mass or less, further preferably 150 ppm by mass or more and 1,500 ppm by mass or less.

From the viewpoint of easily controlling the average cell diameter and the average surface layer film thickness of the expanded beads to fall within desired ranges, as the cell controlling agent, preferably used is a metal borate, more preferably zinc borate. In the case of using zinc borate, the arithmetic average particle diameter by number is preferably 0.5 μm or more and 10 μm or less, more preferably 1 μm or more and 8 μm or less.

The arithmetic average particle diameter by number of zinc borate is determined as follows.

Measuring the particle diameter distribution by volume as measured according to a laser diffraction scattering method. Then, converting this distribution into a particle diameter distribution by number, on the assumption that the shape of the particles is spherical. Then, arithmetically averaging the particle diameter data based on the particle diameter distribution by number. The particle diameter means the diameter of a hypothetical sphere having the same volume as that of the particle.

The expanded polypropylene resin beads of the present invention may contain any resin or elastomer other than the polypropylene resin within a range not detracting from the object and the advantageous effects of the present invention.

The content of the resin or elastomer other than the polypropylene resin in the expanded polypropylene resin beads is preferably 20 parts by mass or less, more preferably 10 parts by mass or less, further preferably 5 parts by mass or less, relative to 100 parts by mass of the polypropylene resin.

The expanded polypropylene resin beads of the present invention can have a fusion-bonding layer on the surface thereof for enhancing the fusion bonding properties between the expanded beads during in-mold molding. The fusion-bonding layer may exist on the entire surfaces or a part of the surface of the expanded beads. Examples of a resin to constitute the fusion-bonding layer include a crystalline polyolefin resin having a melting point lower than the melting point of the polypropylene resin constituting the expanded beads, an amorphous polyolefin resin having a softening point lower than the melting point of the polypropylene resin constituting the expanded beads, and an adhesive resin such as a urethane resin.

A method for forming the fusion-bonding layer on the surface of the expanded beads is not particularly limited. For example, a method for expanding resin particles having a fusion-bonding layer, and a method for adhering a fusion-bonding layer to expanded beads after obtaining the expanded beads are included. When the resin particles having a fusion-bonding layer are expanded to obtain the expanded beads, it is preferable to employ a method of disposing a fusion-bonding layer on the surface of the resin particles by co-extrusion during production of the resin particles.

[Method for Producing Expanded Polypropylene Resin Beads]

The expanded polypropylene resin beads of the present invention can be produced, for example, by discharging polypropylene resin particles that contain a blowing agent, the inorganic pigment, the ultraviolet light absorber, and the hindered amine compound, as dispersed in an aqueous medium in a container, from the container to a pressure atmosphere lower than the pressure inside the container along with the aqueous medium to expand the resin particles. The ultraviolet light absorber contained in the polypropylene resin particles contains the ultraviolet light absorber A having a molecular weight of 360 or more, and the content of the ultraviolet light absorber A in the polypropylene resin particles is preferably 0.01% by mass or more and 2% by mass or less.

One preferred example of the production method is described below.

A preferred method for producing the expanded polypropylene resin beads of the present invention includes a step of dispersing polypropylene resin particles containing the inorganic pigment, the ultraviolet light absorber, the hindered amine compound in an aqueous medium containing an inorganic dispersant in a container, a step of impregnating a blowing agent into the polypropylene resin particles in the container, and an step of discharging the blowing agent-containing polypropylene resin particles out of the container along with the aqueous medium to expand the particles.

Specifically, the preferred method for producing the expanded polypropylene resin beads of the present invention is a method for producing the expanded polypropylene resin beads including a step of dispersing polypropylene resin particles containing the inorganic pigment, the ultraviolet light absorber, the hindered amine compound in an aqueous medium containing an inorganic dispersant in a container, a step of impregnating a blowing agent into the polypropylene resin particles in the container, and an step of discharging the blowing agent-containing polypropylene resin particles out of the container along with the aqueous medium to expand the particles, in which the ultraviolet light absorber contains the ultraviolet light absorber A having a molecular weight of 360 or more, and the content of the ultraviolet light absorber A in the expanded polypropylene resin beads is 0.01% by mass or more and 2% by mass or less.

<Production of Polypropylene Resin Particles>

The resin particles for use in production of the expanded polypropylene resin beads of the present invention can be obtained by feeding the polypropylene resin, the inorganic pigment, the ultraviolet light absorber, and the hindered amine compound, and the other additive to be added if necessary, such as a cell controlling agent, into an extruder, heating and kneading them to give a resin melt, and thereafter extruding the resin melt out of the extruder, while pelletizing it in a strand cutting system, a hot cutting system, an underwater cutting system or the like.

The average mass per one particle (arithmetic average per one particle calculated by measuring the mass of 200 randomly chosen particles) of the resin particles is preferably controlled so as to be 0.1 to 20 mg, more preferably 0.2 to 10 mg, further preferably 0.3 to 5 mg, even more preferably 0.4 to 2 mg. The outer shape of the particles is not particularly limited within a range capable of attaining the intended object of the present invention, but is preferably columnar.

In the case where the outer shape of the resin particles is columnar, the particle diameter (length in the extrusion direction) of the resin particles is preferably 0.1 to 3.0 mm, more preferably 0.3 to 1.5 mm. The ratio (ratio of length/diameter) of the length in the extrusion direction of the resin particles to the length in the direction perpendicular to the extrusion direction of the resin particles (diameter of the resin particles) is preferably 0.5 to 5.0, more preferably 1.0 to 3.0.

In a strand cutting method, the particle diameter, the ratio of length/diameter, and the average mass of the resin particles can be controlled by appropriately changing the extrusion rate, the take-up rate, and the cutter speed in extruding the resin melt to cut it.

(Production of Expanded Polypropylene Resin Beads)

A preferred method for producing the expanded polypropylene resin beads of the present invention includes a dispersion step of dispersing the polypropylene resin particles containing the inorganic pigment, the ultraviolet light absorber, the hindered amine compound in an aqueous medium containing an inorganic dispersant in a container, a blowing agent impregnation step of impregnating a blowing agent into the polypropylene resin particles in the container, and an expanding step of discharging the blowing agent-containing polypropylene resin particles out of the container along with the aqueous medium to expand the particles, and the method preferably includes these steps in this order.

The preferred method for producing the expanded polypropylene resin beads of the present invention includes, as the first step, a dispersion step of dispersing the polypropylene resin particles containing the inorganic pigment, the ultraviolet light absorber, and the hindered amine compound in an inorganic dispersant-containing aqueous medium in a container.

As the dispersing medium for dispersing the resin particles obtained as described above, in a closed vessel, an aqueous dispersing medium is used. The aqueous dispersing medium is a dispersing medium that contains water

as a main ingredient. The proportion of water in the aqueous dispersing medium is preferably 70% by mass or more, more preferably 80% by mass or more, further preferably 90% by mass or more, and may be 100% by mass. Examples of a dispersing medium other than water in the aqueous dispersing medium include ethylene glycol, glycerin, methanol, and ethanol.

From the viewpoint of producing, with high productivity, expanded beads that enable in-mold molding under a relatively low molding pressure and can stably form a molded article having good tensile physical properties, it is preferable that any organic peroxide be not added to the aqueous medium.

In a dispersing medium-discharging expanding method that is an expanding method in which blowing agent-containing polypropylene resin particles are discharged out of a container along with an aqueous medium, which is favorably employed in the present invention, preferably, a dispersant is added to the dispersing medium, so that the polypropylene resin particles heated in the container do not fuse with one another in the container. Only on the surface of the expanded polypropylene resin beads obtained in this step, the dispersant exists. The dispersant may be any one capable of preventing the polypropylene resin particles from fusing in the container, and any of an organic dispersant and an inorganic dispersant is usable. An inorganic dispersant is preferred, and a fine particulate inorganic dispersant is more preferred in view of easy handleability. Examples thereof include a natural or synthetic clay mineral such as kaolin, mica, and clay, and aluminum oxide, titanium oxide, silicon dioxide, basic magnesium carbonate, basic zinc carbonate, calcium carbonate, and iron oxide. One kind of the dispersant may be used, or two or more kinds of these may be used in combination. Among these, a natural or synthetic clay mineral is preferred. The amount of the dispersant to be added is preferably 0.001 to 5 parts by mass relative to 100 parts by mass of the resin particles.

In the case of using the dispersant, preferably, an anionic surfactant such as sodium dodecylbenzenesulfonate, sodium alkylsulfonate, or sodium oleate is used together therewith, as a dispersing aid. Preferably, the dispersing aid is added in an amount of approximately 0.001 to 1 part by mass relative to 100 parts by mass of the resin particles.

The preferred method for producing the expanded polypropylene resin beads of the present invention includes, after the dispersion step, the blowing agent impregnation step of impregnating a blowing agent in the polypropylene resin particles in the container.

The blowing agent for use for expanding the polypropylene resin particles is preferably a physical blowing agent. Examples of the physical blowing agent include an inorganic physical blowing agent and an organic physical blowing agent, and examples of the inorganic physical blowing agent include carbon dioxide, air, nitrogen, helium, and argon. Examples of the organic physical blowing agent include an aliphatic hydrocarbon such as propane, n-butane, i-butane, n-pentane, i-pentane, and hexane, a cycloaliphatic hydrocarbon such as cyclopentane and cyclohexane, and a halogenated hydrocarbon such as chlorofluoromethane, difluoromethane, trifluoromethane, 1-chloro-1,1-difluoroethane, 1,1,1,2-tetrafluoroethane, methyl chloride, ethyl chloride, and methylene chloride. The physical blowing agent may be used alone, or a mixture of two or more kinds thereof may be used. A mixture of the inorganic physical blowing agent and the organic physical blowing agent may be used. The blowing agent for use in the production method is, from the viewpoint of an environmental load and handleability, preferably an inorganic physical blowing agent, more preferably carbon dioxide.

The amount of the blowing agent to be added is preferably 0.1 to 30 parts by mass, more preferably 0.5 to 15 parts by mass, relative to 100 parts by mass of the resin particles.

A method for impregnating the blowing agent in the resin particles in the expanded beads production step is preferably a method including dispersing the resin particles in an aqueous dispersing medium in a closed vessel while injecting the blowing agent under pressure into the closed vessel and keeping the closed vessel at a predetermined temperature under a predetermined pressure to thereby impregnate the blowing agent in the resin particles.

The preferred method for producing the expanded polypropylene resin beads of the present invention includes, after the blowing agent impregnation step, the expanding step of discharging the blowing agent-containing polypropylene resin particles out of the container along with the aqueous medium to expand them.

The pressure inside the closed vessel during expanding in terms of gauge pressure (inner pressure) is preferably 0.5 MPa (G) or more, more preferably 0.8 MPa (G) or more. The upper limit thereof is preferably 4 MPa (G) or less, more preferably 3 MPa (G) or less. Within the range, desired expanded beads can be safely produced with no risk of breakage or explosion of the closed vessel. Preferably, the content of the closed vessel is heated preferably up to 100 to 200°C, more preferably up to 130 to 160°C, and then kept at the temperature for approximately 5 to 30 minutes, and thereafter the blowing agent-containing resin particles are taken out of the closed vessel and discharged to an atmosphere having a lower pressure than the inner pressure inside the closed vessel (for example, an atmospheric pressure) to expand the resin particles.

For example, expanded beads having a high-temperature peak on the first DSC curve can be produced as follows. The resin particles dispersed in the dispersing medium in the closed vessel are heated to a temperature of (the melting point of the polypropylene resin constituting the resin particles - 15°C) to (the melting point of the polypropylene resin constituting the resin particles + 10°C) while the resin particles are held at this temperature for sufficient time, preferably 10 to 60 minutes (holding step). Subsequently, the resin particles that have undergone the holding step are

expanded to obtain expanded beads having the above-described melting peak. In the production of the expanded beads, the resin particles that have undergone the holding step may be prepared in advance and expanded to obtain the expanded beads. For example, the resin particles may be subjected to the holding step as a part of the dispersing step and the blowing agent impregnation step, and the resin particles that have undergone the holding step may be expanded to obtain the expanded beads. From the viewpoint of enhancing the productivity of the expanded beads, preferably, after the resin particles dispersed in the dispersing medium in the closed vessel are heated and the holding step is performed, the content of the closed vessel is discharged from the closed vessel to a pressure atmosphere lower than the pressure inside the closed vessel in the presence of the blowing agent, to expand the resin particles, and the expanded beads having the above-described melting peak are obtained.

The expanded polypropylene resin beads obtained as described above can be pressurized by air or the like to increase the pressure inside the cells of the expanded beads (inner pressure), and then heated by steaming or the like and expanded (two-stage expanding) to give expanded beads having a high expansion ratio (having a low bulk density).

[Expanded Polypropylene Resin Beads Molded Article]

The expanded polypropylene resin beads molded article of the present invention is an in-mold molded article of the expanded beads. The expanded polypropylene resin beads molded article is obtained by in-mold molding of the expanded polypropylene resin beads.

Specifically, the expanded polypropylene resin beads molded article is obtained by in-mold molding of the expanded polypropylene resin beads that contains the inorganic pigment, the hindered amine compound, and the ultraviolet light absorber, in which the ultraviolet light absorber that contains the ultraviolet light absorber A having a molecular weight of 360 or more and in which the content of the ultraviolet light absorber A in the expanded polypropylene resin beads is 0.01% by mass or more and 2% by mass or less.

Therefore, the expanded polypropylene resin beads molded article of the present invention contains the inorganic pigment, the hindered amine compound and the ultraviolet light absorber, and the ultraviolet light absorber contains the ultraviolet light absorber A having a molecular weight of 360 or more, and the content of the ultraviolet light absorber A in the expanded polypropylene resin beads is 0.01% by mass or more and 2% by mass or less.

Preferably, the expanded polypropylene resin beads molded article of the present invention is obtained by in-mold molding of the above-mentioned expanded beads. An in-mold molding method can be carried out by filling a mold with the expanded beads, and heating and molding them using a heating medium such as steam. Specifically, after a mold is filled with the expanded beads, the heating medium such as steam is introduced into the mold to heat and secondarily expand the expanded beads and to fuse the expanded beads each other, and thus an expanded beads molded article given a shape of the molding space can be obtained. As a method for filling a mold with the expanded beads, a publicly known method can be employed. For the filling in a mold in the present invention, examples of the method include a cracking filling method in which before filling a mold with the expanded beads, the mold is opened in advance to spread the molding space, filled with the expanded beads, and then closed to compress the expanded beads, and a pressurization filling method in which after the pressure inside the expanded beads is adjusted to a higher pressure than the atmospheric pressure by 0.01 to 0.3 MPa by previously pressurizing the expanded particles by a gas such as air under pressure to increase the pressure inside the cells of the expanded beads, a mold is filled with the expanded beads under the atmospheric pressure or reduced pressure. A mold can be filled by a compression filling method in which the mold that has been pressurized to have a pressure equal to or higher than the atmospheric pressure by a compressed gas is filled with the expanded beads that have been pressurized to have a pressure equal to higher than the pressurized pressure. In addition, a mold can be filled with the expanded beads by a normal-pressure filling method in which a cavity for the mold is filled with expanded beads having a high secondary expanding force obtained under a special condition under the atmosphere pressure or reduced pressure, a method in which the above-described methods are combined, or the like. Heating and molding can be carried out by a publicly known method, or a method in which heating methods such as unidirectional heating, reversed directional heating, and main heating are appropriately combined, as a heating method using steam or the like.

<Density>

The density of the expanded polypropylene resin beads molded article of the present invention is preferably 10 kg/$m^3$ or more and 500 kg/$m^3$ or less, more preferably 20 kg/$m^3$ or more, even more preferably 30 kg/$m^3$ or more. The density of the expanded polypropylene resin beads molded article is more preferably 200 kg/$m^3$ or less, further preferably 150 kg/$m^3$ or less, even more preferably 100 kg/$m^3$ or less, even more preferably 60 kg/$m^3$ or less. That is, the density of the expanded polypropylene resin beads molded article is more preferably 20 to 200 kg/$m^3$, further preferably 20 to 150 kg/$m^3$, even more preferably 30 to 100 kg/$m^3$, even more preferably 30 to 60 kg/$m^3$. The expanded beads molded article falling within the density range is preferred in terms of light weight and excellent tensile physical

properties.

The density of the expanded polypropylene resin beads molded article is an apparent density calculated by dividing the mass of the expanded beads molded article by the volume to be calculated based on the dimension thereof, and can be measured according to the method described in Examples.

<Ratio [Tensile Strength/Density]>

The ratio of the tensile strength of the expanded polypropylene resin beads molded article of the present invention to the density of the expanded polypropylene resin beads molded article [tensile strength/density] is preferably 0.016 MPa/[kg/$m^3$] or more, more preferably 0.017 MPa/[kg/$m^3$] or more, further preferably 0.018 MPa/[kg/$m^3$] or more. The upper limit thereof is not limited, and is practicably 0.030 MPa/[kg/$m^3$] or less, preferably 0.025 MPa/[kg/$m^3$] or less. That is, the ratio [tensile strength/density] of the molded article is preferably 0.016 to 0.030 MPa/[kg/$m^3$], more preferably 0.017 to 0.030 MPa/[kg/$m^3$], further preferably 0.018 to 0.025 MPa/[kg/$m^3$]. The ratio of the tensile strength of the expanded beads molded article to the density of the expanded beads molded article falling within the range is preferred since a molded article having a good fusion bonding state and excellent tensile physical properties, and capable of stably expressing long-term weather resistance can be obtained.

The tensile strength of the expanded polypropylene resin beads molded article is involved in the fusing state between the expanded beads constituting the molded article. In comparison of molded articles having the same molded article density, higher tensile strength means higher fusion bonding properties between the expanded beads constituting the molded articles. On the other hand, the tensile strength of the molded article depends on the density of the molded article, and therefore, by employing the ratio of the tensile strength of the expanded beads molded article to the density thereof, the fusion bonding state of the molded article can be suitably evaluated.

The tensile strength of the expanded polypropylene resin beads molded article can be measured according to JIS K 6767:1999, and for example, it can be measured according to the method described in Examples. The tensile strength means a maximum nominal stress having occurred until breakage of a test piece in a tensile test. By dividing the measured tensile strength value by the above-mentioned density value, a ratio of tensile strength to density (tensile strength per unit density) can be calculated.

<Tensile Elongation>

The tensile elongation of the expanded polypropylene resin beads molded article of the present invention is preferably 15% or more, more preferably 18% or more, further preferably 20% or more. The upper limit thereof is not limited, and is practicably 50% or less, preferably 40% or less, more preferably 35% or less. That is, the tensile elongation of the expanded polypropylene resin beads molded article is preferably 15% to 50%, more preferably 18% to 40%, further preferably 20% to 35%. The tensile elongation of the expanded beads molded article falling within the range is preferred. This is because a molded article having a good fusion bonding state between the expanded beads therein, in which even the expanded beads in the deep area of the molded article can be favorably fused can be obtained. Thus, the molded article is excellent in durability.

The tensile elongation of the expanded polypropylene resin beads molded article can be measured according to JIS K 6767:1999, and for example, it can be measured according to the method described in Examples. The tensile elongation means an elongation ratio of a test piece when the test piece has cut off in a tensile test.

The expanded polypropylene resin beads molded article of the present invention is excellent in long-term weather resistance and excellent in tensile physical properties, and therefore can be used for purposes of food transport containers, packaging/buffering materials for electric/electronic components, vehicle members such as automobile bumpers, building members such as residential heat insulating materials, miscellaneous goods, furniture, and sporting goods, as shock absorbing materials, heat insulating materials, various packaging materials and others.

EXAMPLES

Next, the present invention is described in further detail with reference to Examples, but the invention is not whatsoever restricted by these Examples.

[Measurement and Evaluation]

For ultraviolet light absorbers, hindered amine compounds, resins, expanded beads, and expanded beads molded articles used in Examples and Comparative Examples, the following measurement and evaluation were carried out. For evaluation, the expanded beads and the expanded beads molded articles were left under a condition of a relative humidity 50%, 23°C, and 1 atm for 2 days, to control the state.

<Bulk Density of Expanded Beads>

A measuring cylinder was filled with about 500 $cm^3$ of expanded beads, and the bulk height of the expanded beads in the measuring cylinder was stabilized by lightly tapping a few times the bottom of the measuring cylinder against the floor face. The bulk volume of the expanded beads that the scale of the measuring cylinder indicated was read, and was referred to as V1 [L]. Next, the mass of the expanded beads was measured, and was referred to as W1 [g].
The mass W1 [g] of the expanded beads was divided by the volume V1[L] thereof (W1/V1), and the unit thereof was converted into [$kg/m^3$] to give the bulk density of the expanded beads.

<Total Heat of fusion and High-Temperature Peak Heat of Fusion of Expanded Beads>

The total heat of fusion and the high-temperature peak heat of fusion of expanded beads were measured by heat flux differential scanning calorimetry according to JIS K 7122:1987. Specifically, about 2 mg of the expanded beads were sampled, and heated from 23°C up to 200°C at 10°C/min for measurement to draw a DSC curve having one or more melting peaks, using a differential scanning calorimeter (trade name "DSC7020" manufactured by Hitachi High-Tech Corporation). In the following description, a resin-intrinsic peak is represented by A, and a high-temperature peak appearing on the higher temperature side than it is represented by B.
A straight line connecting a point $\alpha$ corresponding to 80°C on the DSC curve and a point $\beta$ on the DSC curve corresponding to the melting end temperature T of the expanded beads ($\alpha$-$\beta$) was drawn. The melting end temperature T is an endpoint on the high temperature side at the high-temperature peak B, and is an intersection point of the high-temperature peak and the high-temperature side base line. Next, from a point $\gamma$ on the DSC curve equivalent to the valley between the resin-intrinsic peak A and the high-temperature peak B, a straight line parallel to the vertical axis of the graph was drawn, and a point where the straight line and the straight line ($\alpha$-$\beta$) intersected was referred to as $\delta$.
The area of the high-temperature peak B was an area of a part surrounded by the curve of the high-temperature peak B part on the DSC curve, the line segment ($\delta$-$\beta$), and the line segment ($\gamma$-$\delta$), and was referred to as a melting heat of fusion at the high-temperature peak.
The area of the total melting peak was an area of a part surrounded by the curve of the resin-intrinsic peak A part on the DSC curve, the curve of the high-temperature peak B part, and the line segment ($\alpha$-$\beta$), and was referred to as a total heat of fusion.

<Heat of Fusion at High-Temperature Peak of Surface Layer Portion of Expanded Beads ($\Delta$Hs) and Heat of Fusion at High-Temperature Peak of Inner Portion of Expanded Beads ($\Delta$Hi)>

In each of Examples and Comparative Examples, a section surrounded a range of 200 $\mu$m from the surface of expanded beads to the center of gravity of the expanded beads was cut out from each of the expanded beads to prepare about 2 mg of a sample. The sample was referred to as a surface layer portion of the expanded beads.
In each of Examples and Comparative Examples, an inner portion of the expanded beads was cut out from each of the expanded beads so as not to include the above-mentioned surface layer portion to prepare about 2 mg of a sample. The sample was referred to as an inner portion of the expanded beads.
For each of the surface layer portion of the expanded beads and the inner portion of the expanded beads, heat flux differential scanning calorimetry was carried out in the same manner as that for the above-mentioned <Total Heat of Fusion and High-Temperature Peak Heat of Fusion of Expanded Beads> to determine a high-temperature peak heat of fusion.
The high-temperature peak heat of fusion of the surface layer portion of the expanded beads was referred to as $\Delta$Hs, and the high-temperature peak heat of fusion of the inner portion of the expanded beads was as $\Delta$Hi. A value of 0.86 times $\Delta$Hi and a value of 1.2 times $\Delta$Hi were calculated and represented by $\Delta$Hi$\times$0.86 and $\Delta$Hi$\times$1.2, respectively. The results are shown in Tables 1 and 2.

<Average Cell Diameter of Expanded Beads>

The average cell diameter of expanded beads was measured as follows. 30 expanded beads were randomly chosen from expanded beads. Each of the expanded beads was cut into two portions in such a manner that the cutting line could pass through the center part thereof, and an enlarged photograph of one cross section of every bead was taken. On every cross-section photograph, four line segments were drawn from the outermost surface on one side to the outermost surface on the other side passing through the center part in such a manner that the angle formed by the neighboring two line segments could be equiangular to each other. The number of the cells crossing each line segment was counted, and total length of the four line segments was divided by the total number of cells crossing the line segments to determine the average cell diameter of each of the expanded beads, and the determined values were arithmetically

averaged to give an average cell diameter of the expanded beads.

<Density of Expanded Beads Molded Article>

An expanded beads molded article was left under a condition of a relative humidity 50%, 23°C, and 1 atm for 2 days. Next, the mass thereof was measured, and was referred to as W [g]. Subsequently, based on the dimension of the expanded beads molded article, the volume V [$cm^3$] of the expanded beads molded article was measured. The mass W [g] of the expanded beads molded article was divided by the volume V [$cm^3$] thereof (W/V), and the unit was converted into [$kg/m^3$] to determine the density of the expanded beads molded article.

<Molding Cycle Evaluation>

In in-mold molding to form an expanded beads molded article, the cooling time from the time when main heating was finished to the time when the pressure (surface pressure) generated on the inner surface of a mold became 0.04 MPa (G) was measured. The molding cycle was evaluated according to the following criteria.

A: The cooling time was less than 50 seconds.
B: The cooling time was 50 seconds or more and less than 60 seconds.
C: The cooling time was 60 seconds or more.

In the case where the cooling time was less than 60 seconds, more preferably less than 50 seconds, the time to be taken for cooling is short and the in-mold molding to give an expanded beads molded article can be efficiently carried out, and the case is especially excellent in molding cycle.

In molding cycle evaluation, the expanded beads were each molded under a lowest molding pressure, the cooling time was measured, and the molding cycle was evaluated. The lowest molding pressure is the lower limit value of vapor pressure in the main heating step in which a molded article in which the expanded beads are favorably fused together and that has a good appearance such as little shrinkage on the surface of the molded article and few voids derived from gaps between the expanded beads is obtained.

<Weather Resistance of Expanded Beads Molded Article>

A molded article was irradiated with light under the following condition according to JIS K 7350-2:2008. After irradiation with light, the molded article was tested in a tensile test to measure the tensile physical properties (tensile strength, tensile elongation, tensile strength per density), and observed for the appearance change (change before light irradiation and after light irradiation) to evaluate the weather resistance of the expanded beads molded article.

(Light Irradiation Condition)

Apparatus used: Eye Super Xenon Tester XER-W83 (trade name) manufactured by Iwasaki Electric Co., Ltd.
Light source: Xenon arc lamp
Filter: Inner filter: quartz glass, outer filter: borate glass
Irradiance: 120 $W/m^2$
Irradiation time: 330 hours (corresponding to sunlight 0.5 years), or 1,320 hours (corresponding to sunlight 2 years)
Black panel temperature: 63°C
Spray cycle: water spraying for 18 minutes in 120 minutes (after irradiation with light for 102 minutes, irradiation with light and water spraying for 18 minutes)
Relative humidity: 50%
Size of test piece: 150×70×10 mm

<Tensile Test of Expanded Beads Molded Article>

A tensile test for an expanded beads molded article was carried out under the following condition according to JIS K 6767:1999.

Using a vertical slicer, a cut-out piece was prepared from the expanded beads molded article or from the expanded beads molded article after irradiation with light under the above-described condition, so that the irradiated surface was left. From the cut-out piece, a test piece having a shape of dumbbell No. 1 (gauge length: 40 mm, width:

10 mm, thickness: 10 mm) was prepared using a punching mold. The test piece was tested in the tensile test at a tension rate of 500 mm/min to measure the maximum load during the test and the gauge length at cutting. The maximum nominal stress in the tensile test was referred to as a tensile strength, and the elongation at break of the test piece ([gauge length at cutting - gauge length before test]/[gauge length before test] × 100) was referred to as a tensile elongation. As a measurement apparatus, a Tensilon universal testing machine (manufactured by Orientec Corporation) was used. The tensile strength per density (ratio of the tensile strength of the expanded beads molded article to the density of the expanded beads molded article [tensile strength/density]) was calculated by dividing the tensile strength by the density.

<Evaluation of State of Expanded Beads Molded Article>

The state of an expanded beads molded article after irradiation with light was evaluated according to the following criteria, based on the appearance of the molded article before irradiation with light as a standard reference.

A: No change in appearance. When the surface of the molded article is touched, a powder attached to the hand is not recognized.

B: A change in appearance cannot be visually confirmed. When the surface of the molded article is touched, a powder generated by powdering the resin is attached to the hand.

C: Powdering the resin (chalking) is apparently confirmed. Alternatively, when the surface of the molded article is touched, a powder generated by powdering the resin is significantly attached to the hand.

[Materials]

Materials used in Examples and Comparative Examples are shown below.

<Polypropylene Resin>
FL7540L: trade name "FL7540L" available from The Polyolefin Company Pte. Ltd., melting point 141°C, MFR (load 2.16 kg, 230°C, JIS K 7210-1:2014) 7 g/10 min
<Ultraviolet Light Absorber>

Tinuvin120: trade name "Tinuvin120" available from BASF, benzoate ultraviolet light absorber, 2,4-di-t-butylphenyl-3,5-di-t-butyl-4-hydroxybenzoate, molecular weight 439, melting point 195°C

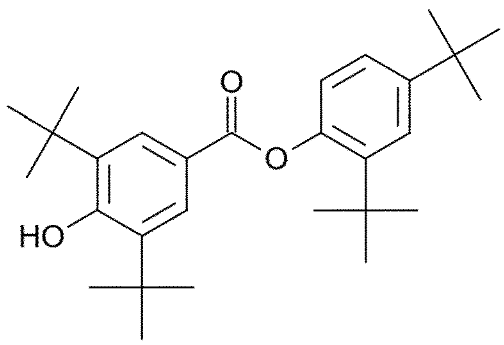

Tinuvin1577: trade name "Tinuvin1577" available from BASF, triazine ultraviolet light absorber, 2-(4,6-diphenyl-1,3,5-triazin-2-yl)-5-(hexyloxy)-phenol, molecular weight 426, melting point 148°C

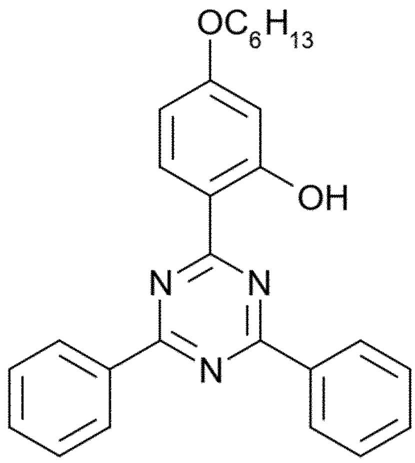

Tinuvin900: trade name "Tinuvin900" available from BASF, benzotriazole ultraviolet light absorber, 2,4-bis(α,α-dimethylbenzyl)-6-(2H-benzotriazol-2-yl)phenol, molecular weight 448, melting point 142°C

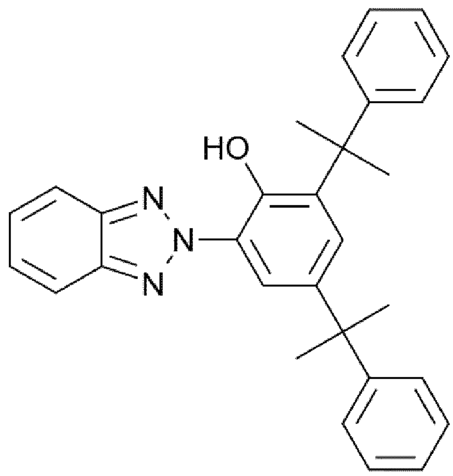

Chimassorb81: trade name "Chimassorb81" available from BASF, benzophenone ultraviolet light absorber, 2-hydroxy-4-(octyloxy)benzophenone, molecular weight 326, melting point 48°C

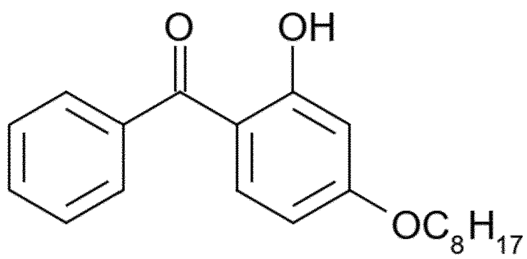

Tinuvin326: trade name "Tinuvin326" available from BASF, benzotriazole ultraviolet light absorber, 2-t-butyl-6-(5-chloro-2H-benzotriazol-2-yl)-4-methylphenol, molecular weight 316, melting point 140°C

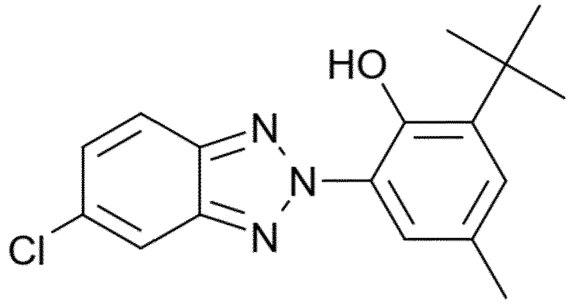

<Hindered Amine Compound>

UV-3529: trade name "CYASORB UV-3529" available from Solvay, X=$CH_3$, NR-type hindered amine, poly{[6-morpholinyl-1,3,5-triazin-2,4-diyl][(1,2,2,6,6-pentamethyl-4-piperidyl)imino]hexamethylene[(1,2,2,6,6-pentamethyl-4-piperidyl)imino]}, polystyrene-equivalent arithmetic average molecular weight 1,700

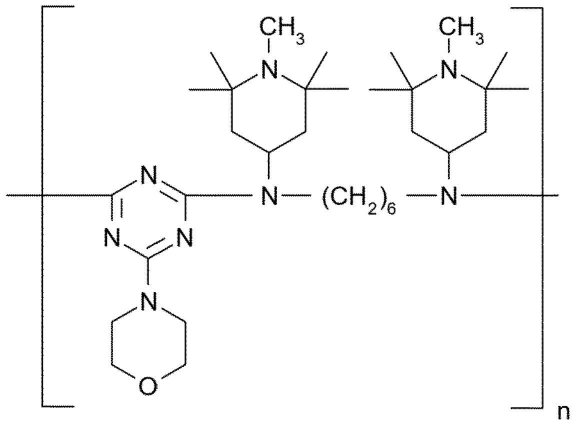

FP-T80: trade name "ADK STAB FP-T80" available from ADEKA Corporation, X=$OC_8H_{17}$, NOR-type hindered amine, bis(1-undecanoxy-2,2,6,6-tetramethylpiperidin-4-yl)carbonate, molecular weight 681

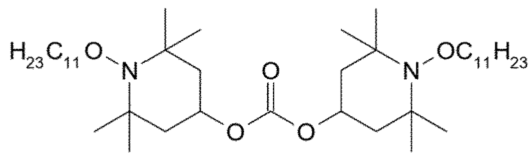

[Production of Expanded Polypropylene Resin Beads]

Examples 1, 4 to 8 and Comparative Example 4

An extruder having an inner diameter of 26 mm, attached with a strand-forming die on the discharge side, was prepared. FL7540L, zinc borate as a cell controlling agent (number-based arithmetic average particle diameter: 7 μm), Tinuvin120, carbon black (furnace black, primary particle diameter: 15 nm), and UV-3529 were put in the extruder, and melted and kneaded to form a resin melt. Tinuvin120, carbon black, and UV-3529 were fed so that the content of zinc borate in the expanded beads could be 500 ppm by mass and the contents of Tinuvin120, carbon black, and UV-3529 in the expanded beads could be as in Table 1 or 2.

The resultant resin melt was extruded out as strands through the strand-forming die, and the extruded strands were cooled in water, and pelletized with a pelletizer to give columnar polypropylene resin particles having an average mass per particle of 1.0 mg.

500 g of the polypropylene resin particles, 3.5 L of water as a dispersing medium, 3 g of kaolin as a dispersant, and 0.2 g of sodium dodecylbenzenesulfonate (trade name: Neogen available from DKS Co., Ltd.) as a surfactant were charged into a 5-L closed vessel.

Next, carbon dioxide as a blowing agent was injected under pressure into the closed vessel, which was then

pressurized up to a gauge pressure 2.5 MPa (G). Next, while stirred, the contents in the closed vessel were heated up to an expanding temperature (146°C) at a heating rate of 2°C/min, and was then kept at the temperature for 15 minutes. Depending on the holding temperature and the holding time, a high-temperature peak heat of fusion (derived from the endothermic curve in DSC measurement) can be controlled. Subsequently, the contents in the closed vessel were discharged under an atmospheric pressure to give expanded polypropylene resin beads. The measurement results of the physical properties and the like of the resultant expanded polypropylene resin beads are shown in Table 1 or 2.

[Production of Expanded Beads Molded Article]

A molding space of a mold capable of molding a board with a height of 250 mm, a width of 200 mm, and a thickness of 50 mm was filled with the expanded polypropylene resin beads while the mold was opened at a distance of 5 mm in the mold opening direction of the mold from a mold clamping state of the mold (length in the thickness direction of the molding space of the mold: 55 mm). After completion of filling, the mold clamping of the mold was carried out (cracking: 5 mm, 10%). Subsequently, in-mold molding was carried out by steam heating, to give an expanded beads molded article in the form of plate. In a heating method, drain valves of the mold on both sides were kept open, and steam was supplied for 5 seconds for preheating of the mold (ventilation step). After that, steam was supplied from one side of the mold to heat the expanded beads, and steam was further supplied from the other side of the mold to heat them. Subsequently, steam was supplied from both sides of the mold under a steam pressure of 0.24 MPa (G) to heat the expanded beads (main heating). After the main heating, the molding space was depressurized and cooled with water until the pressure (surface pressure) generated on the molding surface of the mold by the expanding force of the molded article reached 0.04 MPa (G), and thereafter the mold was opened to take out the molded article from the mold. The molded article taken out from the mold was cured in an oven at 80°C for 12 hours, and then left cooled down to room temperature to give an expanded beads molded article. The results of molding cycle evaluation and weather resistance evaluation of the resultant expanded beads molded article are shown in Table 1 or 2.

Example 2

Expanded polypropylene resin beads were produced in the same manner as in Example 1 except that Tinuvin120 was changed to Tinuvin1577. The measurement results of the physical properties and the like of the resultant expanded polypropylene resin beads are shown in Table 1. Using the expanded polypropylene resin beads obtained herein, an expanded beads molded article was produced in the same manner as in Example 1. The results of molding cycle evaluation and weather resistance evaluation of the resultant expanded beads molded article are shown in Table 1.

Example 3

Expanded polypropylene resin beads were produced in the same manner as in Example 1 except that Tinuvin120 was changed to Tinuvin900. The measurement results of the physical properties and the like of the resultant expanded polypropylene resin beads are shown in Table 1. Using the expanded polypropylene resin beads obtained herein, an expanded beads molded article was produced in the same manner as in Example 1. The results of molding cycle evaluation and weather resistance evaluation of the resultant expanded beads molded article are shown in Table 1.

Example 9

Expanded polypropylene resin beads were produced in the same manner as in Example 1 except that UV-3529 was changed to FP-T80. The measurement results of the physical properties and the like of the resultant expanded polypropylene resin beads are shown in Table 1. Using the expanded polypropylene resin beads obtained herein, an expanded beads molded article was produced in the same manner as in Example 1. The results of molding cycle evaluation and weather resistance evaluation of the resultant expanded beads molded article are shown in Table 1.

Example 10

After the operation of the expanding step in Example 1, the following two-stage expanding step was carried out. The expanded polypropylene resin beads obtained in the expanding step in Example 1 were cured at 60°C for 12 hours, and a pressure resistance closed vessel was filled with the resultant expanded beads (hereinafter referred to as first-stage expanded beads), the pressure inside the closed vessel was increased from normal pressure (atmospheric pressure) to pressurize the expanded beads up to 0.6 MPa (G). The pressurized state of the expanded beads was kept for 12 hours to increase the pressure inside the cells of the expanded beads. The first-stage expanded beads were then taken out of the closed vessel, and the first-stage expanded beads with the internal pressure of the cells of 0.5 MPa (G)

were obtained. Subsequently, the first-stage expanded beads were transferred into a second-stage expanding device. Steam was supplied into the device to expand the first-stage expanded beads to give expanded polypropylene resin beads (second-stage expanded beads) having a bulk density of 33 kg/$m^3$. The measurement results of the physical properties and the like of the resultant expanded polypropylene resin beads are shown in Table 1.

The resultant expanded polypropylene resin beads were put in a pressure resistance closed vessel and pressurized therein so as to increase the pressure inside the cells up to 0.1 MPa (G). An expanded beads molded article was obtained by in-mold molding in the same manner as in Example 1, except that the expanded beads herein were used in place of the expanded beads used in Example 1 and that the steam pressure for heating and molding in the main heating was changed to 0.18 MPa (G). The results of molding cycle evaluation and weather resistance evaluation of the resultant expanded beads molded article are shown in Table 1.

Example 11

Expanded polypropylene resin beads were produced in the same manner as in Example 1 except the ultraviolet light absorber was supplied so that the content of Tinuvin120 was 0.1 parts by mass, the content of Tinuvin1577 was 0.06 parts by mass, and the total content of Tinuvin120 and Tinuvin1577 was 0.2 parts by mass, in the expanded beads. The measurement results of the physical properties and the like of the resultant expanded polypropylene resin beads are shown in Table 1. Using the expanded polypropylene resin beads obtained herein, an expanded beads molded article was produced in the same manner as in Example 1. The results of molding cycle evaluation and weather resistance evaluation of the resultant expanded beads molded article are shown in Table 1.

Example 12

Expanded polypropylene resin beads were produced in the same manner as in Example 1 except that carbon black was changed to cobalt blue. The measurement results of the physical properties and the like of the resultant expanded polypropylene resin beads are shown in Table 1. Using the expanded polypropylene resin beads obtained herein, an expanded beads molded article was produced in the same manner as in Example 1. The results of molding cycle evaluation and weather resistance evaluation of the resultant expanded beads molded article are shown in Table 1.

Comparative Example 1

Expanded polypropylene resin beads were produced in the same manner as in Example 1 except that Tinuvin120 was not used. The measurement results of the physical properties and the like of the resultant expanded polypropylene resin beads are shown in Table 2. Using the expanded polypropylene resin beads obtained herein, an expanded beads molded article was produced in the same manner as in Example 1. The results of molding cycle evaluation and weather resistance evaluation of the resultant expanded beads molded article are shown in Table 2.

Comparative Example 2

Expanded polypropylene resin beads were produced in the same manner as in Example 1 except that Tinuvin120 was changed to Chimassorb81. The measurement results of the physical properties and the like of the resultant expanded polypropylene resin beads are shown in Table 2. Using the expanded polypropylene resin beads obtained herein, an expanded beads molded article was produced in the same manner as in Example 1. The results of molding cycle evaluation and weather resistance evaluation of the resultant expanded beads molded article are shown in Table 2.

Comparative Example 3

Expanded polypropylene resin beads were produced in the same manner as in Example 1 except that Tinuvin120 was changed to Tinuvin326. The measurement results of the physical properties and the like of the resultant expanded polypropylene resin beads are shown in Table 1. Using the expanded polypropylene resin beads obtained herein, an expanded beads molded article was produced in the same manner as in Example 1. The results of molding cycle evaluation and weather resistance evaluation of the resultant expanded beads molded article are shown in Table 2.

Comparative Example 5

Expanded polypropylene resin beads were produced in the same manner as in Example 8 except that Tinuvin120 was not used. The measurement results of the physical properties and the like of the resultant expanded polypropylene resin beads are shown in Table 2. Using the expanded polypropylene resin beads obtained herein, an expanded beads

molded article was produced in the same manner as in Example 8. The results of molding cycle evaluation and weather resistance evaluation of the resultant expanded beads molded article are shown in Table 2.

[Table 1]

| | | | Example | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Expanded beads | Ultraviolet light absorber A | Kind | Tinuvin 120 | Tinuvin 1577 | Tinuvin900 | Tinuvin 120 | Tinuvin 120 | Tinuvin 120 | Tinuvin 120 | Tinuvin 120 | Tinuvin 120 | Tinuvin 120 | Tinuvin120 /Tinuvin1577 | Tinuvin 120 |
| | | Classification | Benzoate | Triazine | Benzotriazole | Benzoate | Benzoate | Benzoate | Benzoate | Benzoate | Benzoate | Benzoate | Benzoate /triazine | Benzoate |
| | | Molecular weight | 439 | 426 | 448 | 439 | 439 | 439 | 439 | 439 | 439 | 439 | 439/426 | 439 |
| | | Melting point (°C) | 195 | 148 | 142 | 195 | 195 | 195 | 195 | 195 | 195 | 195 | 195/148 | 195 |
| | | Content (% by mass) | 0.2 | 0.2 | 0.2 | 0.2 | 0.5 | 1 | 0.1 | 0.2 | 0.2 | 0.2 | 0.2 | 0.2 |
| | Pigment | Inorganic pigment | Carbon black | Carbon black | Carbon black | Carbon black | Carbon black | Carbon black | Carbon black | Carbon black | Carbon black | Carbon black | Carbon black | Cobalt blue |
| | | Content (% by mass) | 3 | 3 | 3 | 0.5 | 3 | 3 | 5 | 0.02 | 3 | 3 | 3 | 0.2 |
| | Content of ultraviolet light absorber A/content of pigment | | 0.07 | 0.07 | 0.07 | 0.4 | 0.2 | 0.3 | 0.02 | 10 | 0.07 | 0.07 | 0.07 | 1 |
| | Hindered amine compound | Kind | UV-3529 | UV-3529 | UV-3529 | UV-3529 | UV-3529 | UV-3529 | UV-3529 | UV-3529 | FP-T80 | UV-3529 | UV-3529 | UV-3529 |
| | | Content (% by mass) | 0.2 | 0.2 | 0.2 | 0.2 | 0.2 | 0.2 | 0.2 | 0.2 | 0.2 | 0.2 | 0.2 | 0.2 |
| | Content of ultraviolet light absorber A/content of hindered amine compound | | 1 | 1 | 1 | 1 | 3 | 5 | 0.5 | 1 | 1 | 1 | 1 | 1 |
| | Content of hindered amine compound/content of inorganic pigment | | 0.07 | 0.07 | 0.07 | 0.4 | 0.07 | 0.07 | 0.04 | 10 | 0.07 | 0.07 | 0.07 | 1 |
| | Bulk density (kg/m$^3$) | | 47 | 46 | 47 | 48 | 47 | 46 | 48 | 46 | 47 | 27 | 47 | 46 |
| | Total heat of fusion (J/g) | | 70 | 75 | 73 | 72 | 71 | 70 | 70 | 71 | 70 | 70 | 71 | 70 |
| | Heat of fusion at high-temperature peak (J/g) | | 14 | 13 | 15 | 15 | 14 | 15 | 14 | 13 | 14 | 16 | 14 | 15 |
| | Heat of fusion at high-temperature peak of surface layer portion and inner portion of beads | ΔHs (J/g) | 15 | 14 | 16 | 16 | 15 | 14 | 15 | 15 | 15 | 15 | 15 | 16 |
| | | ΔHi (J/g) | 14 | 13 | 15 | 15 | 14 | 13 | 14 | 14 | 14 | 14 | 14 | 15 |
| | | ΔHi×0.86 (J/g) | 12 | 11 | 13 | 13 | 12 | 11 | 12 | 12 | 12 | 12 | 12 | 13 |
| | | ΔHi×1.2 (J/g) | 17 | 15 | 18 | 18 | 17 | 16 | 17 | 17 | 17 | 17 | 17 | 18 |
| | Average cell diameter (μm) | | 61 | 62 | 63 | 62 | 60 | 53 | 55 | 80 | 60 | 110 | 59 | 60 |

[Table 1] (continued)

| | | | | Example | | | | | | | | | | | |
|---|---|---|---|---|---|---|---|---|---|---|---|---|---|---|---|
| | | | | 1 | 2 | 3 | 4 | 5 | 6 | 7 | 8 | 9 | 10 | 11 | 12 |
| Expanded beads molded article | Density (kg/m$^3$) | | | 55 | 54 | 55 | 57 | 55 | 54 | 57 | 55 | 55 | 30 | 56 | 54 |
| | Molding cycle (second) | | | 41 | 42 | 53 | 44 | 40 | 39 | 54 | 57 | 41 | 55 | 40 | 44 |
| | | | | A | A | B | A | A | A | B | B | A | B | A | A |
| | Weather resistance | Before irradiation with light | Tensile strength (kPa) | 1015 | 1005 | 980 | 1050 | 995 | 980 | 960 | 1030 | 1050 | 580 | 1020 | 990 |
| | | | Tensile elongation (%) | 23 | 23 | 22 | 24 | 23 | 22 | 22 | 24 | 23 | 28 | 23 | 23 |
| | | | Tensile strength/density (kPa/[kg/m$^3$]) | 18 | 19 | 18 | 18 | 18 | 18 | 17 | 19 | 19 | 19 | 18 | 18 |
| | | After irradiation with light (corresponding to 2.0 y) | Tensile strength (kPa) | 960 | 955 | 935 | 1000 | 980 | 960 | 940 | 950 | 1000 | 550 | 995 | 950 |
| | | | Relative to tensile strength before irradiation with light (%) | 95 | 95 | 95 | 95 | 98 | 98 | 98 | 92 | 95 | 95 | 98 | 96 |
| | | | Tensile elongation (%) | 23 | 22 | 21 | 23 | 22 | 21 | 20 | 20 | 22 | 25 | 22 | 21 |
| | | | Appearance evaluation | A | A | A | A | A | A | A | A | A | A | A | A |

[Table 2]

| | | | Comparative Example | | | | |
|---|---|---|---|---|---|---|---|
| | | | 1 | 2 | 3 | 4 | 5 |
| Expanded beads | Ultraviolet light absorber A | Kind | - | Chimassorb81 | Tinuvin326 | Tinuvin120 | - |
| | | Classification | - | Benzophenone | Benzotriazole | Benzoate | - |
| | | Molecular weight | - | 326 | 316 | 439 | - |
| | | Melting point (°C) | - | 48 | 140 | 195 | - |
| | | Content (% by mass) | - | 0.2 | 0.2 | 3 | - |
| | Pigment | Inorganic pigment | Carbon black | Carbon black | Carbon black | Carbon black | Carbon black |
| | | Content (% by mass) | 3 | 3 | 3 | 3 | 3 |
| | Content of ultraviolet light absorber A/content of pigment | | 0 | 0.07 | 0.07 | 1 | 0 |
| | Hindered amine compound | Kind | UV-3529 | UV-3529 | UV-3529 | UV-3529 | UV-3529 |
| | | Content (% by mass) | 0.2 | 0.2 | 0.2 | 0.2 | 0.2 |
| | Content of ultraviolet light absorber A/content of hindered amine compound | | - | 1 | 1 | 15 | - |
| | Content of hindered amine compound/content of inorganic pigment | | 0.07 | 0.07 | 0.07 | 0.07 | 0.07 |
| | Bulk density ($kg/m^3$) | | 50 | 48 | 47 | 47 | 27 |
| | Total heat of fusion (J/g) | | 71 | 73 | 77 | 70 | 71 |
| | Heat of fusion at high-temperature peak (J/g) | | 13 | 14 | 14 | 14 | 16 |
| | Heat of fusion at high-temperature peak of surface layer portion and inner portion of beads | $\Delta Hs$ (J/g) | 14 | 15 | 15 | 15 | 14 |
| | | $\Delta Hi$ (J/g) | 13 | 14 | 14 | 14 | 13 |
| | | $\Delta Hi \times 0.86$ (J/g) | 11 | 12 | 12 | 12 | 11 |
| | | $\Delta Hi \times 1.2$ (J/g) | 16 | 17 | 17 | 17 | 16 |
| | Average cell diameter (μm) | | 90 | 62 | 61 | 61 | 130 |

(continued)

| | | | | Comparative Example | | | | |
|---|---|---|---|---|---|---|---|---|
| | | | | 1 | 2 | 3 | 4 | 5 |
| Expanded beads molded article | Density ($kg/m^3$) | | | 56 | 57 | 57 | 55 | 30 |
| | Molding cycle (second) | | | 60 | 50 | 50 | 53 | 65 |
| | | | | C | B | B | B | C |
| | Weather resistance | Before irradiation with light | Tensile strength (kPa) | 1000 | 890 | 1005 | 900 | 590 |
| | | | Tensile elongation (%) | 23 | 23 | 23 | 21 | 28 |
| | | | Tensile strength/density (kPa/[$kg/m^3$]) | 18 | 16 | 18 | 16 | 20 |
| | | After irradiation with light (corresponding to 2.0 y) | Tensile strength (kPa) | 900 | 800 | 910 | 860 | 500 |
| | | | Relative to tensile strength before irradiation with light (%) | 90 | 90 | 91 | 96 | 85 |
| | | | Tensile elongation (%) | 22 | 14 | 16 | 14 | 23 |
| | | | Appearance evaluation | C | B | B | A | C |

As seen from the results shown in Tables 1 and 2, the expanded beads molded articles of Examples are excellent in tensile physical properties such as tensile elongation and tensile strength in the tensile test, and further, even in the weathering test under the condition corresponding to sunlight irradiation for about 2 years, they maintain the tensile physical properties with no change of appearance. This shows that the expanded polypropylene resin beads of the present invention are excellent in long-term weather resistance and can form an expanded beads molded article excellent in tensile physical properties. Furthermore, this shows that the expanded polypropylene resin beads molded article of the present invention is excellent in long-term weather resistance and excellent in tensile physical properties.

Industrial Applicability

The expanded polypropylene resin beads molded article of the present invention is excellent in long-term weather resistance and excellent in tensile physical properties, and therefore can be used for purposes of food transport containers, packaging/buffering materials for electric/electronic components, vehicle members such as automobile bumpers, building members such as residential heat insulating materials, miscellaneous goods, furniture, and sporting goods, as shock absorbing materials, heat insulating materials, various packaging materials and others.

## Claims

1. An expanded polypropylene resin bead containing an inorganic pigment, a hindered amine compound, and an ultraviolet light absorber, wherein: the ultraviolet light absorber contains an ultraviolet light absorber A having a molecular weight of 360 or more, and a content of the ultraviolet light absorber A in the expanded polypropylene resin bead is 0.01% by mass or more and 2% by mass or less.

2. The expanded polypropylene resin bead according to claim 1, wherein the ultraviolet light absorber A has a melting point of 50°C or higher and 200°C or lower.

3. The expanded polypropylene resin bead according to claim 1 or 2, wherein a content of the inorganic pigment in the expanded polypropylene resin bead is 0.01% by mass or more and 5% by mass or less.

4. The expanded polypropylene resin bead according to any one of claims 1 to 3,
wherein a ratio of the content of the ultraviolet light absorber A to the content of the inorganic pigment is 0.03 or more and 5 or less.

5. The expanded polypropylene resin bead according to any one of claims 1 to 4,
wherein the ultraviolet light absorber A contains at least one kind selected from the group consisting of a benzoate compound and a triazine compound.

6. The expanded polypropylene resin bead according to any one of claims 1 to 5,
wherein a content of the hindered amine compound in the expanded polypropylene resin bead is 0.01% by mass or more and 2% by mass or less.

7. The expanded polypropylene resin bead according to any one of claims 1 to 6,
wherein a ratio of the content of the ultraviolet light absorber A to the content of the hindered amine compound is 0.1 or more and 5 or less.

8. The expanded polypropylene resin bead according to any one of claims 1 to 7,
wherein an average cell diameter of the expanded polypropylene resin beads is 50 μm or more and 250 μm or less, measured as disclosed in the description.

9. The expanded polypropylene resin bead according to any one of claims 1 to 8,
wherein a bulk density of the expanded polypropylene resin bead is 10 $kg/m^3$ or more and 500 $kg/m^3$ or less, measured as disclosed in the description.

10. An expanded polypropylene resin beads molded article produced by in-mold molding of the expanded polypropylene resin bead of any one of claims 1 to 9.

11. The expanded polypropylene resin beads molded article according to claim 10, wherein a tensile elongation of the

expanded polypropylene resin beads molded article is 15% or more.

**Patentansprüche**

1. Expandierte Polypropylenharzperle, die ein anorganisches Pigment, eine gehinderte Aminverbindung und einen Ultraviolettlicht-Absorber enthält, wobei: der Ultraviolettlicht-Absorber einen Ultraviolettlicht-AbsorberA mit einem Molekulargewicht von 360 oder mehr enthält, und der Gehalt des Ultraviolettlicht-Absorbers A in der expandierten Polypropylenharzperle 0,01 Massen-% oder mehr und 2 Massen-% oder weniger beträgt.

2. Expandierte Polypropylenharzperle nach Anspruch 1, wobei der Ultraviolettlicht-Absorber A einen Schmelzpunkt von 50°C oder höher und 200°C oder niedriger hat.

3. Expandierte Polypropylenharzperle nach Anspruch 1 oder 2, wobei der Gehalt des anorganischen Pigments in der expandierten Polypropylenharzperle 0,01 Massenprozent oder mehr und 5 Massenprozent oder weniger beträgt.

4. Expandierte Polypropylenharzperle nach einem der Ansprüche 1 bis 3, wobei das Verhältnis des Gehalts des Ultraviolettlicht-Absorbers A zum Gehalt des anorganischen Pigments 0,03 oder mehr und 5 oder weniger beträgt.

5. Expandierte Polypropylenharzperle nach einem der Ansprüche 1 bis 4, wobei der Ultraviolettlicht-Absorber A mindestens eine Art enthält, die aus der Gruppe bestehend aus einer Benzoatverbindung und einer Triazinverbindung ausgewählt ist.

6. Expandierte Polypropylenharzperle nach einem der Ansprüche 1 bis 5, wobei der Gehalt der gehinderten Aminverbindung in der expandierten Polypropylenharzperle 0,01 Massenprozent oder mehr und 2 Massenprozent oder weniger beträgt.

7. Expandierte Polypropylenharzperle nach einem der Ansprüche 1 bis 6, wobei das Verhältnis des Gehalts des Ultraviolettlicht-Absorbers A zum Gehalt der gehinderten Aminverbindung 0,1 oder mehr und 5 oder weniger beträgt.

8. Expandierte Polypropylenharzperle nach einem der Ansprüche 1 bis 7, wobei der durchschnittliche Zelldurchmesser der expandierten Polypropylenharzperlen 50 μm oder mehr und 250 μm oder weniger beträgt, gemessen wie in der Beschreibung offenbart.

9. Die expandierte Polypropylenharzperle nach einem der Ansprüche 1 bis 8, wobei die Schüttdichte der expandierten Polypropylenharzperle 10 $kg/m^3$ oder mehr und 500 $kg/m^3$ oder weniger beträgt, gemessen wie in der Beschreibung offenbart.

10. Formkörper aus expandierten Polypropylenharzperlen, hergestellt durch In-Mold-Molding der expandierten Polypropylenharzperle nach einem der Ansprüche 1 bis 9.

11. Formkörper aus expandierten Polypropylenharzperlen nach Anspruch 10, wobei die Zugdehnung des Formkörpers aus expandierten Polypropylenharzperlen 15 % oder mehr beträgt.

**Revendications**

1. Perle expansée en résine à base de polypropylène contenant un pigment inorganique, un composé aminé encombré et un absorbeur de lumière ultraviolette, dans laquelle:
l'absorbeur de lumière ultraviolette contient un absorbeur de lumière ultraviolette A ayant un poids moléculaire de 360 ou plus, et une teneur en absorbeur de lumière ultraviolette A dans la perle de résine de polypropylène expansée est de 0,01 % en masse ou plus et de 2 % en masse ou moins.

2. Perle expansée en résine à base de polypropylène selon la revendication 1, dans laquelle l'absorbeur de lumière ultraviolette A a un point de fusion de 50°C ou plus et de 200°C ou moins.

3. Perle expansée en résine à base de polypropylène selon la revendication 1 ou 2, dans laquelle la teneur en pigment inorganique dans la perle expansée en résine à base de polypropylène est de 0,01 % en masse ou plus et de 5 %

en masse ou moins.

4. Perle expansée en résine à base de polypropylène selon l'une quelconque des revendications 1 à 3, dans laquelle le rapport entre la teneur en absorbeur de lumière ultraviolette A et la teneur en pigment inorganique est de 0,03 our plus et de 5 our moins.

5. Perle expansée en résine à base de polypropylène selon l'une quelconque des revendications 1 à 4, dans laquelle l'absorbeur de lumière ultraviolette A contient au moins un type choisi dans le groupe constitué d'un composé de benzoate et d'un composé de triazine.

6. Perle expansée en résine à base de polypropylène selon quelconque l'une des revendications 1 à 5, dans laquelle la teneur en composé aminé encombré dans la perle expansée en résine à base de polypropylène est de 0,01 % en masse ou plus et de 2 % en masse ou moins.

7. Perle expansée en résine à base de polypropylène selon quelconque l'une des revendications 1 à 6, dans laquelle le rapport entre la teneur en absorbeur de lumière ultraviolette A et la teneur en composé aminé encombré est de 0,1 ou plus et de 5 ou moins.

8. Perle expansée en résine à base de polypropylène selon quelconque l'une des revendications 1 à 7, dans laquelle le diamètre moyen des cellules des perles expansée en résine à base de polypropylène est de 50 μm ou plus et de 250 μm ou moins, mesuré conformément à la méthode décrite dans la description.

9. Perle expansée en résine à base de polypropylène selon quelconque l'une des revendications 1 à 8, dans laquelle la densité en vrac de la perle expansée en résine à base de polypropylène est de 10 $kg/m^3$ ou plus et de 500 $kg/m^3$ ou moins, mesuré conformément à la méthode décrite dans la description.

10. Article moulé des perles expansées en résine à base de polypropylène produit par moulage dans le moule les perles expansées en résine à base de polypropylène de l'une quelconque des revendications 1 à 9.

11. Article moulé des perles expansées en résine à base de polypropylène selon la revendication 10, dans lequel l'allongement à la traction de l'article moulé des perles expansées en résine à base de polypropylène est 15 % ou plus.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2743295 A1
- JP 2003321567 A